(19) Europäisches Patentamt
European Patent Office
Office européen des brevets

(11) EP 2 197 889 B1

(12) **FASCICULE DE BREVET EUROPEEN**

(45) Date de publication et mention de la délivrance du brevet:
**18.07.2012 Bulletin 2012/29**

(21) Numéro de dépôt: **08839819.3**

(22) Date de dépôt: **26.09.2008**

(51) Int Cl.:
***C07F 9/50*** *(2006.01)* ***C07F 9/58*** *(2006.01)*
***C07B 37/04*** *(2006.01)* ***C07F 1/08*** *(2006.01)*
***B01J 31/24*** *(2006.01)* ***B01J 31/28*** *(2006.01)*
***C07D 231/10*** *(2006.01)* ***C07C 43/275*** *(2006.01)*

(86) Numéro de dépôt international:
**PCT/FR2008/051736**

(87) Numéro de publication internationale:
**WO 2009/050394 (23.04.2009 Gazette 2009/17)**

(54) **UTILISATION DE COMPLEXES CUIVRE/PHOSPHINES CYCLOVINYLIQUES COMME CATALYSEURS D'ARYLATION**

VERWENDUNG VON CYCLOVINYLPHOSPHIN/KUPFER-KOMPLEXEN ALS ARYLIERUNGSKATALYSATOREN

USE OF CYCLOVINYL PHOSPHINE/COPPER COMPLEXES AS ARYLATION CATALYSTS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **28.09.2007 FR 0706826**

(43) Date de publication de la demande:
**23.06.2010 Bulletin 2010/25**

(73) Titulaire: **Centre National de la Recherche Scientifique (C.N.R.S.)
75016 Paris (FR)**

(72) Inventeurs:
- **TAILLEFER, Marc
F-34570 Vailhauques (FR)**
- **KADDOURI, Hamid
F-34000 Montpellier (FR)**
- **OUAZZANI, Fouad
30000 Fes (MA)**

(74) Mandataire: **Colombet, Alain André et al
Cabinet Lavoix
62, rue de Bonnel
69448 Lyon Cedex 03 (FR)**

(56) Documents cités:
**EP-A1- 1 167 372**

- **IRINA P. BELETSKAYA AND ANDREI V. CHEPRAKOV: "Copper in cross-coupling reactions The post-Ullmann chemistry" COORDINATION CHEMISTRY REVIEWS, vol. 248, 2004, pages 2337-2364, XP002474468**
- **XI, CHANJUAN ET AL: "Metallophosphination of Alkynes: Efficient Synthesis of .beta.-Functionalized Alkenylphosphines" ORGANOMETALLICS , 26(4), 1084-1088 CODEN: ORGND7; ISSN: 0276-7333, 20 janvier 2007 (2007-01-20), XP002474469**
- **KADDOURI ET AL: ANGEW. CHEM. INT. ED., vol. 48, 2009, pages 333-336,**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention concerne l'utilisation de composés de type phosphines cyclovinyliques sous forme de complexes avec le cuivre, comme catalyseurs de réactions de formation de liaisons carbone-carbone et cabone-hétéroatome.

Plus précisément, la présente invention concerne l'utilisation de catalyseurs de type complexe cuivre/phosphine cyclovinylique dans des réactions d'arylation de nucléophiles (azotés, oxygénés, carbonés, et autres), plus généralement dans des réactions conduisant à la création de liaisons carbone-carbone (C-C) ou carbone-hétéroatome (C-HE) selon le procédé dit de Ullmann (F. Ullmann et H. Kipper, Ber. dtsch. Chem. Ges., 1905, 38, 2120-2126).

La réaction dite de Ullmann catalysée au cuivre est une des méthodes les plus utilisées dans l'industrie en raison du coût attractif du cuivre, en comparaison avec les coûts d'autres métaux noble tels que le palladium, le ruthénium, et autres.

Les familles de molécules obtenues par ces réactions possèdent des motifs structuraux « aryl-nucléophile » (Ar-Nu) présents dans un très grand nombre de molécules intermédiaires de chimie fine, nécessaires à la préparation de principes actifs en santé humaine, animale ou végétale, ou même de précurseurs de divers matériaux.

Les réactions industrielles connues à ce jour pour préparer de telles molécules font le plus souvent appel à des systèmes catalytiques de type palladium/ligands très coûteux et très toxiques. De telles réactions présentent par conséquent une rentabilité économique faible,

Il est donc nécessaire de proposer des alternatives plus rentables et moins toxiques aux catalyseurs utilisés aujourd'hui dans les réactions de type Ullmann.

Récemment, Buchwald et coll. (J. Am. Chem. Soc., 2001, 123, 7727-7729) ont proposé d'utiliser des ligands classiques du cuivre pour réaliser cette réaction catalysée au cuivre. La demande de brevet internationale WO-A-03/101966 décrit des ligands du cuivre permettant une réaction de type Ullmann dans des conditions douces, avec des quantités catalytiques de cuivre. Ces ligands sont principalement des ligands de type oxime qui requièrent une synthèse spécifique et conduisent par conséquent à des produits de réaction relativement onéreux.

EP 1 167 372 A1 divulgue l'utlisation d'un complexe comprenant du palladium et une phosphine cyclovinylique et un procédé de création de liaison carbone-carbone ou de liaison carbone-hétéroatome en présence d'un complexe comprenant du palladium. COORDINATION CHEMISTRY REVIEWS, vol. 248, 2004, pages 2337-2364 enseigne l'utilisation de complexes de cuivre pour des réactions couplage.

Toutefois, les coûts des systèmes catalytiques et leur toxicité peuvent encore être diminués, tout en maintenant, voire en améliorant encore les rendements des réactions de couplage définies plus haut et en maintenant, voire en améliorant les sélectivités desdites réactions.

Ainsi, un premier objectif de la présente invention consiste à proposer des composés susceptibles de former des complexes avec le cuivre, utilisables dans des réactions de type Ullmann, et conduisant à des coûts réactionnels inférieurs à ceux engendrés jusqu'à présent pour de telles réactions de couplage.

Un autre objectif consiste à proposer des composés susceptibles de former des complexes avec le cuivre utilisables dans des réactions de type Ullmann, présentant une faible toxicité et facilement synthétisables, notamment sur le plan industriel.

Comme autre objectif, la présente invention vise à proposer des systèmes catalytiques peu onéreux, faiblement toxiques, et utilisables dans des réactions de couplage de type Ullmann, avec des rendements élevées et des sélectivités élevées.

Un autre objectif encore est de proposer des systèmes catalytiques permettant de réaliser des réactions de couplage de type Ullmann dans des conditions opératoires douces, notamment à température inférieure à 100°C, voire à température ambiante, et à pression modérée, voire à pression atmosphérique, et même en l'absence d'atmosphère réactionnelle inerte.

Il a maintenant été découvert que les objectifs définis ci-dessus peuvent être atteints en totalité ou en partie grâce à un système catalytique contenant du cuivre et au moins un composé de type phosphine cyclovinylique, tel que décrit ci-après.

La présente invention a tout d'abord pour objet l'utilisation, en tant que ligand d'un complexe comprenant du cuivre, d'une phosphine cyclovinylique de formule (1) :

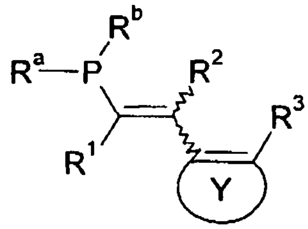

(1)

formule dans laquelle :

- $R^a$ et $R^b$, identiques ou différents, de préférence identiques, représentent chacun un radical indépendamment choisi parmi alkyle, aryle, hétéroaryle, monoalkylamino, dialkylamino, alkoxy, aryloxy, hétéroaryloxy ;
- $R^1$ représente hydrogène ou alkyle $R^2$ et $R^3$, identiques ou différents, sont choisis indépendamment parmi l'hydrogène, un radical hydrocarboné et un radical hétéroaryle ; et
- le cycle Y représente un noyau mono-, bi- ou tri-cyclique, comportant :
  - un total de 5 à 20 chaînons ;
  - éventuellement un ou plusieurs hétéroatomes choisis parmi azote, oxygène, soufre et phosphore ; et
  - éventuellement une ou plusieurs autres doubles liaisons intracycliques ; ledit cycle Y étant éventuellement substitué par une ou plusieurs espèces chimiques choisies parmi alkyl-G-, alcényl-G-, alcynyl-G-, aryl-G-, hétéroaryl-G- (où G représente une liaison, l'atome d'oxygène ou l'atome de soufre), halogène, $-NO_2$, $-NH_2$, -CN et $PR^aR^b$, où $R^a$ et $R^b$ sont tels que définis précédemment.

Dans la présente invention, les termes suivants ont les significations ci-après, sauf indication contraire :

- « alkyle » ou « alkyl- » représente un radical hydrocarboné saturé, linéaire ou ramifié comportant de 1 à 10 atomes de carbone, de préférence de 1 à 6 atomes de carbone, et en particulier le radical méthyle, éthyle, les radicaux propyles, butyles, pentyles, hexyles, heptyles, octyles, nonyles et décyles ;
- « alcényle » ou « alcényl- » représente un radical hydrocarboné possédant au moins une double liaison, ledit radical étant linéaire ou ramifié et comportant de 2 à 10 atomes de carbone, de préférence de 2 à 6 atomes de carbone, et par exemple le radical éthylényl-, *iso*-propylényl-, ou butadiényl- ;
- « alcynyle » ou « alcynyl- » représente un radical hydrocarboné possédant au moins une triple liaison, ledit radical étant linéaire ou ramifié et comportant de 2 à 10 atomes de carbone, de préférence de 2 à 6 atomes de carbone, et par exemple le radical acétylényl-, ou propargyl- ;
- « aryle » ou « aryl- » représente un radical hydrocarboné aromatique mono ou polycyclique, et par exemple le radical phényle ou le radical naphtyle ;
- « hétéroaryle » ou « hétéroaryl- » représente un radical hydrocarboné aromatique mono ou polycyclique, comportant en outre un ou plusieurs hétéroatomes, identiques ou différents, choisis parmi azote, oxygène, soufre, et phosphore, chacun des cycles comportant 5 ou 6 chaînons ; des exemples de radicaux hétéroaryle sont les radicaux pyridyles, quinolyles, imidazolyles, tétrazolyles, sans que cette liste ne constitue une quelconque limitation ;
- « radical hydrocarboné » tel qu'indiqué pour les radicaux $R^1$, $R^2$ et $R^3$, représente un radical hydrocarboné ramifié, linéaire ou cyclique (mono- ou polycyclique), comportant de 1 à 20 atomes de carbone, et pouvant comporter une ou plusieurs insaturations sous forme de double(s) et/ou triple(s) liaison(s), par exemple et de manière non limitative méthyle, éthyle, propyle, isopropyle, butyle, isobutyle, sec-butyle, tert-butyle, cyclohexyle, benzyle, phényle, vinyle, allyle, et autres ;
- dans les termes « alkoxy, aryloxy, hétéroaryloxy, monoalkylamino et dialkylamino », les définitions des termes alkyl-, aryl- et hétéroaryl-correspondent aux termes génériques définis ci-dessus ;
- « halogène » désigne fluor, chlore, brome et iode.

L'ensemble des radicaux dont les définitions figurent ci-dessus peuvent éventuellement être substitués par un ou plusieurs atomes d'halogènes, ou halogène a la définition précitée, par un ou plusieurs radicaux alkyle, alcényle et/ou alcynyle, tels que définis ci-dessus, par un ou plusieurs radicaux hydroxy, alkoxy, alcényloxy, alcynyloxy, aryle, hétéroaryle, amino, alkylamino, dialkylamino, carboxy, carbonyle, carbonylamino, carbonylalkylamino, carbonyldialkylamino, les substituants pouvant être identiques ou différents.

Le cycle Y présent dans la phosphine de formule (1) peut être un noyau aromatique ou non aromatique, mono-, bi- ou tri-cyclique, éventuellement porteur de un ou plusieurs hétéroatomes choisis parmi azote, oxygène, soufre et

phosphore.

Parmi les noyaux monocycliques, on peut citer, à titre d'exemples non limitatifs, le cyclopentène, le cyclopentadiène, les pyrroles, les imidazoles, les pyrrolines, les imidazolines, les pyrazolines, le furane, le dihydrofurane, le thiophène, le dihydrothiophène, les isoxazoles, thiazoles et isothiazoles ainsi que leurs analogues dihydrogénés, le benzène, les cyclohexadiènes, le cyclohexène, la pyridine et ses analogues di- et tétra-hydrogénés, les pyrazines, pyrimidines et pyridazines et leurs analogues di- et tétra-hydrogénés, les pyranes et dihydropyranes, la triazine et ses analogues di- et tétra-hydrogénés, la dithiazine, le cycloheptène, les cycloheptadiènes, les azépines et leurs analogues partiellement hydrogénés, le cyclooctène, les cyclooctadiènes, le cyclooctatriène, et les azocines et leurs analogues partiellement hydrogénés.

Dans un mode de réalisation préférée, le cycle présent dans la phosphine de formule (1) est un cycle pyridine, substitué ou non substitué.

Parmi les noyaux bicycliques, on peut citer, à titre d'exemples non limitatifs, le pentalène, l'indane, les indènes, les bornènes, les norbornènes, le naphtalène, l'azulène, l'heptalène, le cyclopentacyclooctène, les benzocycloheptènes, le benzocyclooctène, l'indolizine, l'indole, l'isoindole, les quinazolines, la quinoline, l'isoquinoline, la phtalazine, la naphtyridine, la quinoxaline, la cinnoline, les chromanes, isochromanes chromènes et isochromènes, les indolines et isoindolines, ainsi que les analogues partiellement hydrogénés de chacun de ces composés.

Parmi les noyaux tricycliques, on peut citer, à titre d'exemples non limitatifs, les indacènes, les acénaphtylènes, le fluorène, le phénalène, le phénanthrène, l'anthracène, le thianthrène, le xanthène, la phénoxathiine, les carbazoles, la carboline, la phénanthridine, l'acridine, la périmidine, la phénanthroline, la phénazine, la phénothiazine, la phénoxazine, ainsi que les analogues partiellement hydrogénés de chacun de ces composés.

Dans les paragraphes précédents, le terme « analogues partiellement hydrogénés » indique des analogues dans lesquels subsiste au moins une double liaison entre deux atomes de carbone, ces deux atomes de carbone n'étant pas tous les deux à la jonction de deux ou trois noyaux.

Dans la formule développée du composé de formule (1) indiquée plus haut, les liaisons en traits « ondulés » indiquent que les deux doubles liaisons peuvent chacune se trouver en configuration *cis* ou *trans,* c'est-à-dire que la phosphine cyclovinylique de formule (1) peut être de configuration *E* ou *Z*.

Les phosphines cyclovinyliques obtenues selon le procédé de l'invention peuvent être, pour ce qui concerne la double liaison reliée à l'atome de phosphore, spécifiquement de configuration *Z* (formule (1*Z*)) ou de configuration *E* (formule (1*E*)) ou sous forme de mélange en toutes proportions :

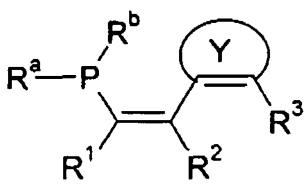
(1*Z*)

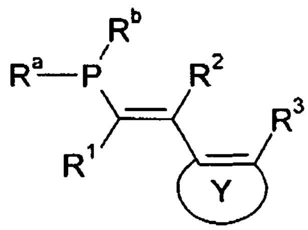
(1*E*)

Les isomères *E* et *Z* des phosphines obtenues selon le procédé de la présente invention peuvent être séparés, si nécessaire, selon des méthodes ou procédés classiques et connus de l'homme du métier.

Selon les applications envisagées, on préfère les phosphines cyclovinyliques de formule 1*Z*, ou les phosphines cyclovinyliques de formule 1*E*, ou bien encore les mélanges des phosphines cyclovinyliques 1*E* et 1*Z*, en toutes proportions.

Selon un aspect de l'invention, on préfère les composés de formule (1) possédant les caractéristiques suivantes, prises isolément ou en combinaison de deux ou plusieurs d'entre elles :

- $R^a$ et $R^b$, identiques ou différents, représentent chacun un radical indépendamment choisi parmi alkyle, notamment méthyle, éthyle propyle, butyle ; aryle, notamment phényle ou naphtyle, hétéroaryle, notamment pyridyle ou quinolyle, et de préférence $R^a$ et $R^b$ sont identiques et représentent chacun phényle ;
- $R^1$, représente hydrogène ou alkyle, notamment méthyle, éthyle ou propyle, de préférence $R^1$ représente hydrogène ;
- $R^2$ et $R^3$ identiques ou différents, sont choisis indépendamment parmi l'hydrogène, un radical alkyle, un radical aryle et un radical hétéroaryle, en particulier parmi l'hydrogène et un radical alkyle, notamment méthyle, éthyle ou propyle ; et
- Y représente un noyau mono-, bi- ou tri-cyclique, de préférence mono-cyclique comportant 5 ou 6 chaînons et éventuellement 1, 2 ou 3 hétéroatomes choisis parmi azote, oxygène et soufre, Y étant de préférence un noyau aromatique, éventuellement substitué par une ou plusieurs espèces chimiques choisies parmi alkyl-G-, alcényl-G-, alcynyl-G-, aryl-G-, hétéroaryl-G- (où G représente une liaison, l'atome d'oxygène ou l'atome de soufre), halogène,

$-NO_2$, $-NH_2$, -CN et $PR^aR^b$ où $R^a$ et $R^b$ sont tels que définis précédemment.

Selon un autre aspect de l'invention, on préfère les composés de formule (1) possédant les caractéristiques suivantes :

- $R^a$ et $R^b$, identiques ou différents, représentent chacun un radical indépendamment choisi parmi aryle, notamment phényle ou naphtyle, et hétéroaryle, notamment pyridyle ou quinolyle, et de préférence $R^a$ et $R^b$ sont identiques et représentent chacun phényle ;
- $R^1$, $R^2$ et $R^3$ identiques ou différents, sont choisis indépendamment parmi l'hydrogène et un radical alkyle, notamment méthyle, éthyle ou propyle ; et
- Y représente un noyau monocyclique, de préférence mono-cyclique comportant 6 chaînons et éventuellement 1, 2 ou 3 hétéroatomes, de préférence 1 hétéroatome, choisis parmi azote, oxygène et soufre, de préférence azote, Y étant de préférence un noyau aromatique, éventuellement substitué par une ou plusieurs espèces chimiques choisies parmi alkyl-G-, alcényl-G-, alcynyl-G-, aryl-G-, hétéroaryl-G- (où G représente une liaison, l'atome d'oxygène ou l'atome de soufre), halogène, $-NO_2$, $-NH_2$, -CN et $PR^aR^b$, où $R^a$ et $R^b$ sont tels que définis précédemment.

De manière tout à fait préférée, l'utilisation selon la présente invention met en oeuvre un composé de formule (1) dans laquelle :

- $R^a$ et $R^b$ sont identiques et représentent chacun un radical phényle ;
- $R^1$, $R^2$ et $R^3$ sont identiques et représentent chacun l'atome d'hydrogène ; et
- le cycle Y représente un noyau benzène ou pyridine, l'atome d'azote du noyau pyridine étant avantageusement en position $\alpha$ par rapport à la double liaison présente sur la formule (1), Y étant éventuellement substitué, mais de préférence non substitué, par une ou plusieurs espèces chimiques choisies parmi alkyl-G-, alcényl-G-, alcynyl-G-, aryl-G-, hétéroaryl-G- (où G représente une liaison, l'atome d'oxygène ou l'atome de soufre), halogène, $-NO_2$, $-NH_2$, et -CN.

Les composés de formule (1) définis ci-dessus peuvent être obtenus à partir de composés aisément disponibles dans le commerce, ou peuvent être facilement préparés à partir de modes opératoires connus de la littérature, par exemple comme décrit par M. Taillefer et H. J. Cristau, Tet. Lett., 39, (1998), 7857 ou encore M. Taillefer et coll., J. Organometall. Chem., 624, (2001), 307-315.

Par exemple, le procédé de préparation des composés de formule (1) peut avantageusement être réalisé en une seule opération (« one pot »), c'est-à-dire sans qu'il soit nécessaire d'isoler et/ou de purifier les intermédiaires de synthèse. On peut toutefois isoler et/ou purifier les intermédiaires, par exemple dans le but d'étudier le bon déroulement de la réaction ou sa cinétique, d'analyser les produits intermédiaires formés, et autres.

Ainsi, un exemple de procédé de préparation des composés de formule (1) comprend les étapes de :

a) mise en contact d'un halogénure de phosphonium de formule (2), avec une base forte, dans un solvant polaire aprotique, par exemple le tétrahydrofurane, à basse température, généralement entre -70°C et 0°C, par exemple -50°C, pour conduire au diylure de phosphonium (3) :

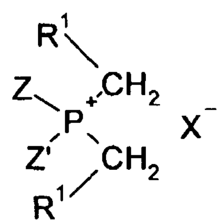
(2)

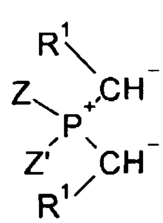
(3)

où $R^1$ est tel que défini précédemment, Z et Z' possèdent des définitions identiques à celles de $R^a$ et $R^b$ définis précédemment, et X représente un atome d'halogène choisi parmi fluor, chlore, brome et iode ;

b) lequel diylure (3) est mis à réagir, en milieu solvant polaire aprotique, par exemple le tétrahydrofurane, à une température généralement comprise entre -70°C et +10°C, par exemple -10°C, avec une halogénophosphine (4) :

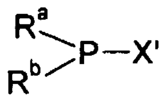

(4)

où $R^a$ et $R^b$ sont tels que définis précédemment, et X' représente un atome d'halogène choisi parmi fluor, chlore, brome et iode ;

pour conduire à l'ylure de phosphonium (5a) qui subit un réarrangement par prototropie pour donner l'ylure de phosphonium (5b) :

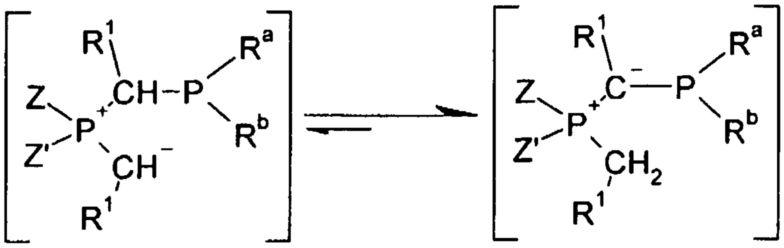

(5a) (5b)

où $R^a$, $R^b$, $R^1$, Z et Z' sont tels que définis précédemment ;

c) l'ylure (5b) étant alors mis en présence, généralement à une température comprise entre 0°C et 50°C, par exemple à température ambiante, dans un solvant polaire aprotique, tel que le tétrahydrofurane, d'un dérivé cyclique carbonylé α,β-insaturé de formule (6) :

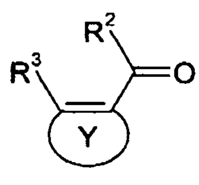

(6)

dans laquelle $R^2$, $R^3$ et Y sont tels que définis précédemment,

pour conduire, après élimination du solvant et éventuelle purification, à la phosphine cyclovinylique de formule (1).

Le procédé décrit ci-dessus peut avantageusement être réalisé dans un seul réacteur (« one pot »), c'est-à-dire sans qu'il soit nécessaire d'isoler tous ou certains des intermédiaires. On peut cependant, bien entendu et si on le souhaite, isoler un ou plusieurs des intermédiaires, avantageusement lorsqu'ils sont stables.

La base forte utilisée pour la préparation du diylure de phosphonium (3) décrit ci-dessus, est généralement une base métallée, c'est-à-dire une base forte comportant un ou plusieurs métaux, avantageusement choisis parmi les métaux alcalins et alcalino-terreux, et en particulier parmi lithium, sodium, potassium, magnésium, calcium et baryum. Les bases fortes lithiées sont préférées, notamment le butyllithium. Dans ce cas, le contre-ion du diylure de phosphonium (3) est le cation lithium.

Selon la présente invention, les phosphines cyclovinyliques de formule (1) sont utilisées comme ligands du cuivre pour former des complexes.

En effet, les phosphines cyclovinyliques présentent un grand intérêt en chimie de coordination et en catalyse, en raison du fait qu'elles combinent deux ligands très importants de la chimie organométallique : deux (ou plusieurs) doubles liaisons conjuguées, et l'atome de phosphore du groupement phosphine. Les phosphines cyclovinyliques décrites *supra* peuvent en outre contenir d'autres sites de coordination, en particulier lorsqu'elles comprennent des radicaux ou noyaux porteurs d'hétéroatomes susceptibles de former des liaisons de coordination.

De tels complexes du cuivre avec au moins une phosphine cyclovinylique de formule (1) telle que définie *supra,* constituent un autre objet de la présente invention.

Les complexes selon l'invention peuvent être représentés schématiquement sous la forme Pho-CyV/Cu, où Pho-CyV représente une phosphine cyclovinylique de formule (1) définie plus haut, et Cu représente un atome de cuivre. Cette représentation schématique n'indique en aucune façon le nombre de moles de phosphine cyclovinylique présentes

par rapport au nombre d'atomes de cuivre présents.

On appelle « complexe monomère », un complexe Pho-CyV/Cu qui comporte un atome de cuivre, « complexe dimère », un complexe Pho-CyV/Cu qui comporte deux atomes de cuivre, « complexe trimère », un complexe Pho-CyV/Cu qui comporte trois atomes de cuivre, etc.

À titre d'exemples de complexes selon l'invention, on peut citer le complexe dimère pyridylvinyldiphénylphosphine/iodure de cuivre $[C_5H_4N\text{-}CH{=}CH\text{-}PPh_2]_2Cu_2I_2$, où Ph représente le radical phényle, sous forme d'isomère *Z* ou *E*, purs ou en mélange desdits deux isomères en toutes proportions.

Les complexes Pho-CyV/Cu définis ci-dessus peuvent être préparés selon des techniques classiques connues de l'homme du métier. Par exemple, les complexes Pho-CyV/Cu peuvent être préparés par mise en contact d'au moins une phosphine cyclovinylique, notamment de formule (1) définie *supra,* avec le cuivre métallique ou un dérivé du cuivre (cuivre(I) ou cuivre(II)), par exemple un halogénure de cuivre, tel que l'iodure, le bromure ou le chlorure cuivrique ou cuivreux, ou d'autres dérivés, notamment les composés organo-cuivrés, par exemple l'acétylacétonate de cuivre.

La réaction est généralement effectuée sous atmosphère inerte, par exemple sous azote ou argon, en milieu solvant organique, de préférence un solvant polaire aprotique, par exemple l'acétonitrile. La réaction de complexation est habituellement conduite à une température comprise entre 0˚C et 80˚C, selon la nature des composés en présence, et généralement la température de réaction est la température ambiante.

Le complexe est généralement obtenu sous la forme d'un précipité qui est isolé du milieu réactionnel selon des techniques connues en soi, par exemple par filtration, et éventuellement recristallisation dans un solvant, avantageusement identique à celui utilisé pour la réaction de complexation.

Selon une variante, le complexe Pho-CyV/Cu peut être avantageusement préparé *in situ* dans le milieu réactionnel de la réaction catalysée par le complexe Pho-CyV/Cu.

La présente invention concerne ainsi l'utilisation, en tant que ligand d'un complexe comprenant du cuivre d'une phosphine cyclovinylique de formule (1) comme décrit précédemment. Le complexe phosphine cyclovinylique / cuivre (noté Pho-CyV/Cu dans la suite du présent exposé) peut être lui-même utilisé dans un grand nombre de réactions catalytiques, en particulier les réactions mettant en oeuvre un catalyseur à base de cuivre, plus particulièrement et avantageusement les réactions de couplage catalytiques, dites réactions de Ullmann.

Ainsi, selon un autre aspect, la présente invention concerne un procédé de création de liaison carbone-carbone (C-C) ou de liaison carbone-hétéroatome (C-HE) en faisant réagir un composé porteur d'un groupement partant avec un composé nucléophile porteur d'un atome de carbone ou d'un hétéroatome (HE) susceptible de se substituer au groupement partant, créant ainsi une liaison C-C ou C-HE, procédé dans lequel la réaction est réalisée en présence d'une quantité efficace d'un système catalytique comprenant au moins un complexe cuivre/phosphine cyclovinylique selon la revendications.

Les inventeurs ont à présent découvert que des systèmes catalytiques à base de cuivre complexé par une phosphine cyclovinylique permettent d'effectuer la création de liaison carbone-carbone (C-C) ou de liaison carbone-hétéroatome (C-HE) en faisant réagir un composé porteur d'un groupement partant avec un composé nucléophile porteur d'un atome de carbone ou d'un hétéroatome (HE) susceptible de se substituer au groupement partant, créant ainsi une liaison C-C ou C-HE.

Le schéma général du procédé selon la présente invention peut être illustré comme suit :

$$R{-}Q{:}\ +\ Y{-}R^0 \xrightarrow[\text{}]{\text{catalyseur}\ \text{complexe Pho-CyV/Cu}} R{-}Q{-}R^0$$

dans lequel :

- $Y\text{-}R^0$ représente un composé porteur d'un groupe partant Y ; et
- R-Q: représente un composé nucléophile, R étant le résidu dudit composé nucléophile, et Q étant un atome de carbone ou un hétéroatome (HE) qui peut se substituer audit groupe partant Y.

Selon une première variante du procédé de la présente invention, on réalise une réaction d'arylation en faisant réagir un composé aromatique porteur d'un groupe partant avec un composé nucléophile.

Selon une autre variante du procédé de l'invention, on réalise une réaction de vinylation ou d'alcynation en faisant réagir respectivement un composé comportant une double liaison ou une triple liaison en position a d'un groupe partant, avec un composé nucléophile.

Dans l'exposé qui suit de la présente invention, le terme « arylation » est utilisé dans son sens large, puisqu'on envisage la mise en oeuvre d'un composé insaturé porteur d'un groupement partant qui est soit de type aliphatique insaturé, soit de type aromatique carbocyclique ou hétérocyclique.

Par « composé nucléophile », on entend un composé organique hydrocarboné aussi bien acyclique que cyclique ou polycyclique et dont la caractéristique est de comprendre au moins un atome porteur d'un doublet libre, qui peut comprendre ou non une charge, et de préférence, un atome d'azote, d'oxygène, de soufre, de bore ou de phosphore, ou comprend un atome de carbone qui peut donner sa paire d'électrons.

Comme mentionné précédemment, le composé nucléophile comprend au moins un atome porteur d'un doublet libre qui peut être apporté par un groupe fonctionnel et/ou un carbanion.

À titre de groupes fonctionnels et/ou de carbanions comprenant ledit au moins un atome, on peut mentionner notamment les atomes et groupes suivants :

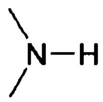 ; 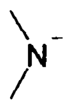 ; 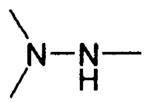 ; 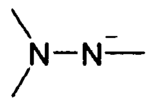 ; 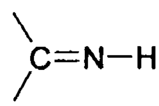 ;

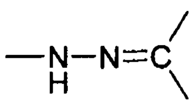 ; 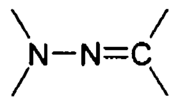 ; 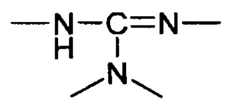 ; 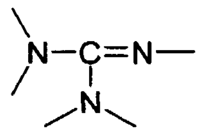 ;

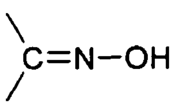 ; 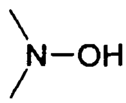 ; 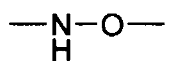 ; 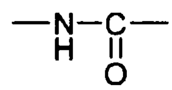 ; 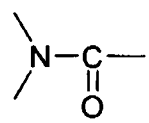 ;

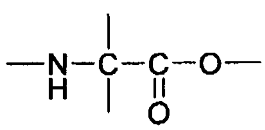 ; 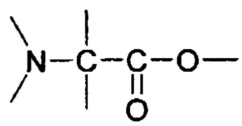 ; 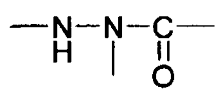 ; 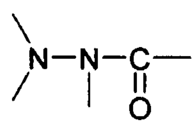 ;

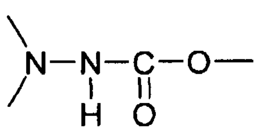 ; 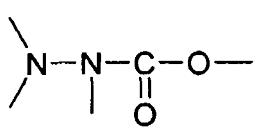 ; 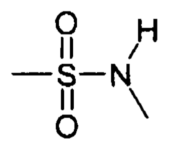 ; 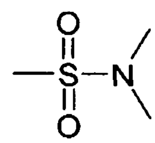 ;

-O-H ; $-O^-$ ; -S- ; $-S^-$ ;

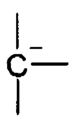 ; 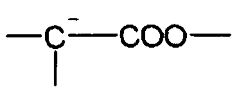 ; 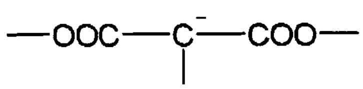 ; 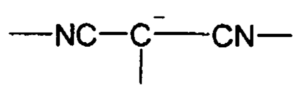 ;

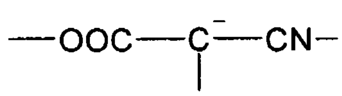 ;

$-N=C^--$ ; $N\equiv C^-$ ; $N_3^-$ ;
$N(CN)_2^-$; $P(CN)_2^-$; $C(CN)_3^-$; $C(CN)_2NO^-$; $NCO^-$; $NCS^-$; $NSO^-$; $CNO^-$;
$N\equiv C$-; $-C\equiv C^-$ ;

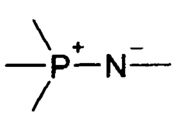 ; 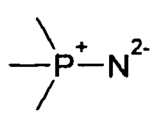 ;

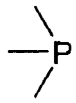 ; 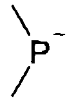 ; 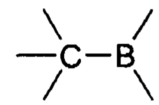 .

Selon une autre variante de l'invention, le composé nucléophile comprend au moins un atome d'azote porteur d'un doublet libre inclus dans un cycle saturé, insaturé ou aromatique; le cycle comprend généralement de 3 à 8 atomes.
Il est à noter que lorsque le composé nucléophile comprend un groupe fonctionnel, dont des exemples sont donnés ci-dessus, et qui porte une ou plusieurs charges négatives, ledit composé se trouve alors sous une forme salifiée. Le contre-ion est généralement un cation métallique, tel qu'un métal alcalin, de préférence le lithium, le sodium ou le potassium, ou un métal alcalino-terreux, de préférence le calcium, ou le reste d'un composé organométallique, tel que notamment magnésien ou zincique.
Un premier avantage du procédé de l'invention est d'effectuer la réaction à température modérée.
Un autre avantage est de pouvoir utiliser une large gamme d'agents de couplage, en particulier d'agents d'arylation, de nucléophiles, non seulement les iodures, mais aussi les bromures, les chlorures ou les triflates, notamment les iodures d'aryle, les bromures d'aryle, les chlorures d'aryle ou les triflates d'aryle.
Un autre intérêt du procédé de l'invention est de faire appel à une catalyse par le cuivre plutôt que le palladium ou le nickel, c'est-à-dire un catalyseur moins toxique et apportant en outre un avantage du point de vue économique.
Le procédé de l'invention intéresse un nombre important de composés nucléophiles et des exemples sont donnés ci-après, à titre illustratif, et sans aucun caractère limitatif.
Une première catégorie de substrats (composés nucléophiles) auxquels s'applique le procédé de l'invention comprend les dérivés organiques azotés et plus particulièrement les amines primaires ou secondaires ; les dérivés d'hydrazine ou d'hydrazone ; les amides ; les sulfonamides; les dérivés de l'urée ; les dérivés hétérocycliques de préférence azotés et/ou soufrés.
Plus précisément, les amines primaires ou secondaires peuvent être représentées par la formule générale (Ia) :

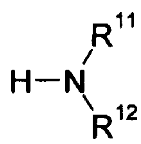

**(Ia)**

dans laquelle formule (Ia) :
$R^{11}$ et $R^{12}$ identiques ou différents, sont choisi parmi l'hydrogène, un radical hydrocarboné (1 à 20 atomes de carbone, comme défini précédemment), un radical aryle, un radical hétéroaryle, ainsi que parmi un enchaînement quelconque de deux ou plusieurs des groupes précités, étant entendu que au plus l'un des groupes $R^{11}$ et $R^{12}$ représente l'atome d'hydrogène.
Les amines mises en oeuvre préférentiellement répondent à la formule (Ia) dans laquelle $R^{11}$ et $R^{12}$, identiques ou différents, représentent un groupe alkyle en $C_1$ à $C_{15}$, de préférence en $C_1$ à $C_{10}$, un groupe cycloalkyle en $C_3$ à $C_8$, de préférence en $C_5$ ou en $C_6$, ou un groupe aryle ou arylalkyle en $C_6$ à $C_{12}$.
Comme exemples plus particuliers de groupes $R^{11}$ et $R^{12}$, on peut mentionner les groupes alkyle en $C_1$ à $C_4$, phényle, naphtyle ou benzyle.
Comme exemples plus spécifiques d'amines de formula (Ia), on peut mentionner l'aniline, la N-méthylaniline, la diphénylamine, la benzylamine et la dibenzylamine.
La présente invention n'exclut pas la présence d'une ou plusieurs insaturations dans la (ou les) chaîne(s) hydrocarbonée(s), telles que une ou plusieurs double et/ou triple liaisons, qui peuvent être conjuguées ou non conjuguées.
La (ou les) chaîne(s) hydrocarbonée(s) peu(ven)t être également interrompue(s) par un ou plusieurs hétéroatomes (par exemple oxygène, soufre, azote, phosphore), et/ou par un groupe fonctionnel non-réactif, tel que par exemple -CO-.
Il est à noter que le groupe amino peut être sous forme d'anions. Le contre-ion est alors un cation métallique, de préférence un cation de métal alcalin, et plus préférentiellement le sodium ou le potassium. Comme exemples de tels composés, on peut citer l'amidure de sodium ou de potassium.
La chaîne hydrocarbonée peut éventuellement porter un ou plusieurs substituants, comme indiqué précédemment, et en particulier des atomes, groupes ou radicaux choisis parmi halogène, ester, amino ou alkyle et/ou arylphosphine, dans la mesure où 'ils n'interfèrent pas.
Les groupes aliphatiques acycliques, linéaires ou ramifiés, saturés ou insaturés, peuvent éventuellement porter

un substituant cyclique. Le terme « cycle » désigne un cycle carbocyclique ou hétérocyclique, saturé, insaturé ou aromatique.

Le groupe aliphatique acyclique peut être relié au cycle par un lien valentiel, un hétéroatome ou un groupe fonctionnel tels que oxy, carbonyle, carboxyle, sulfonyle etc.

Comme exemples de substituants cycliques, on peut envisager des substituants cycloaliphatiques, aromatiques ou hétérocycliques, notamment cycloaliphatiques comprenant 6 atomes de carbone dans le cycle ou benzéniques, ces substituants cycliques étant eux-mêmes éventuellement porteurs d'un substituant quelconque dans la mesure où ils ne gênent pas les réactions intervenant dans le procédé de l'invention. On peut mentionner en particulier, les groupes alkyle, alkoxy en $C_1$ à $C_4$.

Parmi les groupes aliphatiques porteurs d'un substituant cyclique, on vise plus particulièrement les groupes cycloalkylalkyle, par exemple, cyclohexylalkyle ou les groupes arylalkyle de préférence en $C_7$ à $C_{12}$, notamment benzyle ou phényléthyle.

Dans la formule générale (Ia), les groupes $R^{11}$ et $R^{12}$ peuvent représenter également indépendamment l'un de l'autre un groupe carbocyclique saturé ou comprenant 1 ou 2 insaturations dans le cycle, généralement en $C_3$ à$C_8$, de préférence à 6 atomes de carbone dans le cycle ; ledit cycle pouvant être substitué. Comme exemples préférés de ce type de groupes, on peut citer les groupes cyclohexyle éventuellement substitués notamment par des groupes alkyles linéaires ou ramifiés, ayant de 1 à 4 atomes de carbone.

Les groupes $R^{11}$ et $R^{12}$ peuvent représenter indépendamment l'un de l'autre, un groupe hydrocarboné aromatique, et notamment benzénique répondant à la formule générale ($F_1$) :

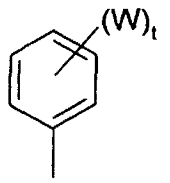

($F_1$)

dans laquelle :

- t représente 0, 1, 2, 3, 4 ou 5 ; et
- W représente un groupe choisi parmi alkyle en $C_1$-$C_6$ linéaire ou ramifié, alkoxy en $C_1$-$C_6$ linéaire ou ramifié, alkylthio en $C_1$-$C_6$ linéaire ou ramifié, -$NO_2$, -CN, halogène, et $CF_3$.

Le groupe hydrocarboné aromatique peut donc être substitué. W illustre certains types de substituants préférés mais l'énumération n'est pas limitative.

$R^{11}$ et $R^{12}$ peuvent également représenter indépendamment l'un de l'autre un groupe hydrocarboné aromatique polycyclique avec les cycles pouvant former entre eux des systèmes *ortho*-condensés, *ortho*- et *péri*-condensés. On peut citer plus particulièrement un groupe naphtyle, ledit cycle pouvant être substitué.

$R^{11}$ et $R^{12}$ peuvent également représenter indépendamment l'un de l'autre un groupe hydrocarboné polycyclique constitué par au moins 2 carbocycles saturés et/ou insaturés ou par au moins 2 carbocycles dont l'un seul d'entre eux est aromatique et formant entre eux des systèmes *ortho*- ou *ortho*- et *péri*-condensés. Généralement, les cycles sont en $C_3$ à $C_8$, de préférence en $C_6$. Comme exemples plus particuliers, on peut citer le groupe bornyle ou le groupe tétrahydronaphtalène.

$R^{11}$ et $R^{12}$ peuvent également représenter indépendamment l'un de l'autre un groupe hétérocyclique, saturé, insaturé ou aromatique, comportant notamment 5 ou 6 atomes dans le cycle dont un ou deux hétéroatomes tels que les atomes d'azote (non substitué par un atome d'hydrogène), de soufre et d'oxygène ; les atomes de carbone de cet hétérocycle pouvant également être substitués.

$R^{11}$ et $R^{12}$ peuvent aussi représenter un groupe hétérocyclique polycyclique défini comme étant soit un groupe constitué d'au moins deux hétérocycles aromatiques ou non contenant au moins un hétéroatome dans chaque cycle et formant entre eux des systèmes *ortho*- ou *ortho*- et *péri*-condensés, ou soit un groupe constitué par au moins un cycle hydrocarboné aromatique ou non et au moins un hétérocycle aromatique ou non formant entre eux des systèmes *ortho*- ou *ortho*- et *péri*-condensés ; les atomes de carbone desdits cycles pouvant éventuellement être substitués.

À titre d'exemples de groupes $R^{11}$ et $R^{12}$ de type hétérocyclique, on peut citer entre autres, les groupes furyle, thiényle, isoxazolyle, furazannyle, isothiazolyle, pyridyle, pyridazinyle, pyrimidinyle, pyranyle, phosphino et les groupes quinolyle, naphtyridinyle, benzopyranyle, benzofuranyle.

Le nombre de substituants présents sur chaque cycle dépend de la condensation en carbone du cycle et de la présence ou non d'insaturation sur le cycle. Le nombre maximum de substituants susceptibles d'être portés par un

cycle est aisément déterminé par l'homme du métier.

D'autres composés nucléophiles susceptibles d'être mis en oeuvre dans le procédé de l'invention sont par exemple les dérivés de l'hydrazine répondant à la formule (Ib) :

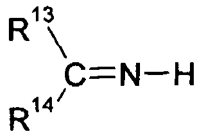

(Ib)

dans laquelle :

- $R^{13}$ et $R^{14}$, identiques ou différents, ont la signification donnée pour $R^{11}$ et $R^{12}$ dans la formule (Ia), et au plus l'un des groupes $R^3$ et $R^4$ représente l'atome d'hydrogène.

Les groupes $R^{13}$ et $R^{14}$ représentent plus particulièrement un groupe alkyle de $C_1$ à $C_{15}$, de préférence de $C_1$ à$C_{10}$, un groupe cycloalkyle de $C_3$ à $C_8$, de préférence en $C_5$ ou $C_6$, un groupe aryle ou arylalkyle de $C_6$ à $C_{12}$. De préférence encore, $R^{13}$ et $R^{14}$ représentent un groupe alkyle en $C_1$ à $C_4$, phényle, benzyle ou naphtyle.

Comme autres nucléophiles, on peut citer les oximes et les hydroxylamines, qui peuvent être représentées par les formules générales (Ic) et (Id) respectivement :

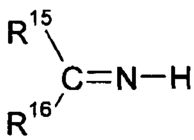

(Ic)

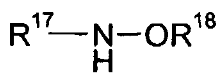

(Id)

formules dans lesquelles :

- $R^{15}$ et $R^{16}$, identiques ou différents, possèdent les définitions données pour $R^{11}$ et $R^{12}$ dans la formule (Ia), et au plus l'un des groupes $R^{15}$ et $R^{16}$ représente l'atome d'hydrogène.
- $R^{17}$ possède les définitions données pour $R^{11}$ ou $R^{12}$ dans la formule (Ia), l'atome d'hydrogène excepté ; et
- $R^{18}$ est choisi parmi l'atome d'hydrogène, un groupe aliphatique acyclique linéaire ou ramifié, saturé ou insaturé, et un groupe carbocyclique monocyclique ou polycyclique, saturé ou insaturé ; ainsi que parmi un enchaînement quelconque de deux ou plusieurs desdits groupes.

Des exemples préférés d'oximes ou d'hydroxylamines de formules (Ic) et (Id), respectivement, sont ceux pour lesquels $R^{15}$, $R^{16}$ et $R^{17}$ représentent alkyle en $C_1$ à $C_{15}$, de préférence en $C_1$ à $C_{10}$ ; cycloalkyle en $C_3$ à $C_8$, de préférence en $C_5$ ou $C_6$ ; ou aryle ou arylalkyle en $C_6$ à $C_{12}$.

Comme exemples plus particuliers de groupes $R^{15}$, $R^{16}$ et $R^{17}$, on peut mentionner les groupes alkyle en $C_1$ à $C_4$, phényle, naphtyle ou benzyle. Quant à $R^{18}$, il représente de préférence alkyle en $C_1$ à $C_4$ ou benzyle.

Selon un autre aspect, la présente invention met en oeuvre des composés nucléophiles de type hydrazine, qui peuvent être représentés par la formule (Ie) suivante :

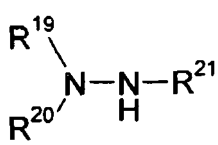

(Ie)

dans laquelle :

- $R^{19}$, $R^{20}$ et $R^{21}$, identiques ou différents, possèdent les définitions données pour $R^{11}$ et $R^{12}$ dans la formule (Ia) ;
- $R^{21}$ représente l'atome d'hydrogène ou un groupement protecteur G ; et
- au moins un des groupes $R^{19}$, $R^{20}$ et $R^{21}$ ne représente pas l'atome d'hydrogène ;
- ou bien $R^{19}$ et $R^{20}$ peuvent former ensemble, et avec l'atome d'azote qui les porte, un groupe hétérocyclique en $C_3$-$C_{20}$, monocyclique ou polycyclique, saturé, insaturé ou aromatique.

Des hydrazines préférées de formule (Ie) ci-dessus, sont celles dans lesquelles $R^{19}$ et $R^{20}$ identiques ou différents, représentent alkyle en $C_1$-$C_{15}$, de préférence en $C_1$-$C_{10}$ ; groupe cycloalkyle en $C_3$-$C_8$, de préférence en $C_5$ ou $C_6$ ou aryle ou arylalkyle en $C_6$-$C_{12}$. Plus préférentiellement, les hydrazines sont celles de formule (ie), dans laquelle $R^{19}$ et $R^{20}$, identiques ou différents, représentent alkyle en $C_1$ à $C_4$, phényle, benzyle ou naphtyle.

$R^{19}$ et $R^{20}$ peuvent être reliés ensemble, de manière à former, ave l'atome d'azote qui les porte, un groupe hétérocyclique en $C_3$-$C_{20}$. monocyclique ou polycyclique, saturé, insaturé ou aromatique, comprenant deux ou trois cycles *ortho*-condensés, c'est-à-dire au moins deux cycles qui ont deux atomes de carbone en commun.

Pour les composés polycycliques, le nombre d'atomes de chaque cycle peut varier de préférence entre 3 et 6. Selon un mode de réalisation préféré, $R^{19}$ et $R^{20}$ forment ensemble un cycle cyclohexane ou fluorénone.

Dans la formule (Ie) ci-dessus, $R^{21}$ représente de préférence l'atome d'hydrogène, alkyle (de préférence $C_1$-$C_{12}$), alcényle ou alcynyle (de préférence $C_2$-$C_{12}$), cycloalkyle (de préférence $C_3$-$C_{12}$), aryle ou arylalkyle (de préférence $C_6$-$C_{12}$). De préférence encore, $R^{21}$ représente l'atome d'hydrogène ou un groupe alkyle en $C_1$-$C_4$.

Il doit être noté que lorsque le composé nucléophilie comprend un groupe $NH_2$, les deux atomes d'hydrogène peuvent réagir. Dans un tel cas, et afin d'augmenter la sélectivité de la réaction, l'un ou les deux atomes d'hydrogène peuvent avantageusement être bloqués, par l'utilisation de groupe protecteur. De tels groupes protecteurs sont bien connus dans le domaine, et on peut citer les groupes protecteurs couramment utilisés, tels que par exemple les groupes acyle (acétyle, benzoyle), BOC (butoxycarbonyle), CBZ (carbobenzoxy), FMOC (trifluorométhyloxycarbonyle) ou MSOC (méthanesulfényl-2-éthoxycarbonyle). On pourra à ce sujet se reporter par exemple à l'ouvrage de T. W. Greene et coll., Protective Groups in Organic Synthesis, 2e édition, John Wiley & Sons, Inc., en ce qui concerne les réactions de protection et de déprotection des groupes amino.

D'autres composés nucléophiles qui peuvent être mis en oeuvre dans le procédé de la présente invention sont les composés de type hydrazone, qui peuvent être représentés par la formule (If) :

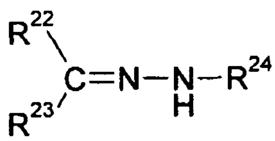

(If)

dans laquelle :

- $R^{22}$, $R^{23}$ et $R^{24}$, identiques ou différents, possèdent les définitions données pour $R^{11}$ et $R^{12}$ dans la formule (Ia) ;
- au plus l'un des groupes $R^{22}$ et $R^{23}$ représente l'atome d'hydrogène ;
- ou bien $R^{22}$ et $R^{23}$ peuvent former ensemble, et avec l'atome d'azote qui les porte, un groupe carbocyclique ou hétérocyclique en $C_3$-$C_{20}$, monocyclique ou polycyclique, saturé, insaturé ou aromatique.

Des exemples préférés d'hydrazones de formule (If) ci-dessus, sont celles dans lesquelles $R^{22}$ et $R^{23}$, identiques ou différents, représentent alkyle en $C_1$-$C_{15}$, de préférence en $C_1$-$C_{10}$; un groupe cycloalkyle en $C_3$-$C_8$, de préférence en $C_5$ or $C_6$ ; ou aryle ou arylalkyle en $C_6$-$C_{12}$. Plus préférentiellement, des exemples d'hydrazones de formule (If), sont celles dans lesquelles $R^{22}$ et $R^{23}$, identiques ou différents, représentent alkyle en $C_1$ à $C_4$, phényle, benzyle ou naphtyle.

$R^{21}$ et $R^{23}$ peuvent former ensemble, et avec l'atome d'azote qui les porte, un groupe carbocyclique ou hétérocyclique en $C_3$-$C_{20}$, monocyclique ou polycyclique, saturé, insaturé ou aromatique, comprenant deux ou trois cycles *ortho*-condensés.

Pour les composés polycycliques, le nombre d'atomes de chaque cycle peut varier, de préférence entre 3 et 6. Selon un mode de réalisation préféré, $R^{22}$ et $R^{23}$ forment ensemble un cycle cyclohexane ou fluorénone.

Dans la formule (If) ci-dessus, $R^{24}$ représente de préférence l'atome d'hydrogène, un groupe alkyle (de préférence en $C_1$-$C_{12}$), alcényle ou alcynyle (de préférence en $C_2$-$C_{12}$), cycloalkyle (de préférence $C_3$-$C_{12}$), aryle ou arylalkyle (de préférence $C_6$-$C_{12}$). De préférence encore, $R^{24}$ représente l'atome d'hydrogène ou un groupe alkyle en $C_1$-$C_4$.

L'invention vise également les composés de type amide répondant plus particulièrement à la formule (Ig) :

$R^{25}$-NH-CO-$R^{26}$ (Ig)

dans laquelle $R^{25}$ et $R^{26}$ ont la signification donnée pour $R^{11}$ et $R^{12}$ dans la formule (Ia).

Comme exemples de composés de formule (Ig), on peut citer l'oxazolidine-2-one, le benzamide et l'acétamide.

L'invention s'applique également à des composés de type sulfonamide qui peuvent par exemple répondre à la formule (Ih) :

$R^{27}$-$SO_2$-NH-$R^{28}$ (Ih)

dans laquelle $R^{27}$ et $R^{28}$ ont la signification donnée pour $R^{11}$ et $R^{12}$ dans la formule (Ia).

Comme exemples de composés de formule (Ih), on peut citer le tosylhydrazide.

Comme autres types de substrats nucléophiles, on peut mentionner les dérivés de l'urée tels que les guanidines et qui peuvent être représentés par la formule(Ii) :

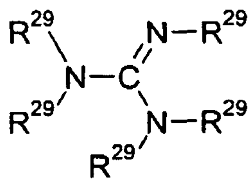

(Ii)

dans ladite formule (Ii), les groupes $R^{29}$, identiques ou différents, ont la signification donnée pour $R^{11}$ et $R^{12}$ dans la formule (Ia).

Comme exemples de composés de formule (Ii), on peut citer la N,N,N',N'-tétraméthylguanidine.

D'autres exemples encore de composés nucléophiles qui peuvent être utilisés dans le procédé de la présente invention comprennent les acides aminés et leurs dérivés, par exemple ceux répondant à la formule (Ij) suivante :

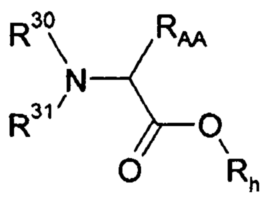

(Ij)

dans laquelle :

- $R_{AA}$ représente l'atome d'hydrogène ou le résidu d'un acide aminé, de préférence l'atome d'hydrogène ; un alkyle linéaire ou ramifié en $C_1$-$C_{12}$ portant éventuellement un groupe fonctionnel ; aryle ou arylalkyle en $C_6$-$C_{12}$ ; ou un groupe fonctionnel, de préférence un groupe hydroxyle ;
- $R^{30}$ et $R^{31}$ possèdent les définitions données $R^{11}$ et $R^{12}$ dans la formule (Ia) ;
- $R_h$ représente l'atome d'hydrogène ; un cation métallique, de préférence un cation de métal alcalin ; ou un groupe hydrocarboné en $C_1$-$C_{12}$, de préférence alkyle en $C_1$-$C_{12}$.

Selon un mode de réalisation préféré, $R_{AA}$ dans la formule (Ij) ci-dessus représente alkyle, éventuellement comportant un groupe fonctionnel, par exemple -OH, $-NH_2$, $-CO-NH_2$, -NH-CNH-, $-HN-C(O)-NH_2$, -COOH, -SH, $-S-CH_3$, ou un groupe imidazole, pyrrole, ou pyrazole.

Des exemples de tels acides aminés comprennent la glycine, la cystéine, l'acide aspartique, l'acide glutamique, l'histidine.

Des substrats nucléophiles tout à fait bien adaptés à la mise en oeuvre du procédé de l'invention sont les dérivés hétérocycliques comprenant au moins un atome nucléophile tel qu'un atome d'azote, de soufre ou de phosphore.

Plus précisément, de tels composés répondent à la formule générale (Ik) :

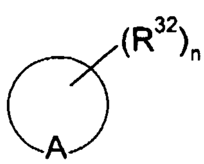

(Ik)

dans ladite formule (Ik) :

- A symbolise le reste d'un cycle formant tout ou partie d'un système hétérocyclique, aromatique ou non, monocyclique ou polycyclique dont l'un des atomes de carbone est remplacé par au moins un atome nucléophile tel qu'un atome

d'azote, de soufre ou de phosphore ;

- $R^{32}$, identique(s) ou différent(s), représente(nt) le(s) substituants du cycle ;
- n représente le nombre de substituants sur le cycle.

L'invention s'applique notamment aux composés hétérocycliques monocycliques répondant à la formule (Ik) dans laquelle A symbolise un hétérocycle, saturé ou non, ou aromatique comportant notamment 5 ou 6 atomes dans le cycle pouvant comprendre de 1 ou 3 hétéroatomes tels que les atomes d'azote, de soufre et d'oxygène et dont au moins l'un d'entre eux est un atome nucléophile tel que NH ou S.

A peut également représenter un composé hétérocyclique polycyclique défini comme étant constitué par au moins 2 hétérocycles aromatiques ou non contenant au moins un hétéroatome dans chaque cycle et formant entre eux des systèmes *ortho*- ou *ortho*- et *péri*-condensés ou soit un groupe constitué par au moins un carbocycle aromatique ou non et au moins un hétérocycle aromatique ou non formant entre eux des systèmes *ortho*- ou *ortho*- et *péri*-condensés.

Il est également possible de partir d'un substrat résultant de l'enchaînement d'un hétérocycle saturé, insaturé ou aromatique tel que précité et d'un carbocycle saturé, insaturé ou aromatique. Par carbocycle, on entend de préférence un cycle de type cycloaliphatique ou aromatique ayant de 3 à 8 atomes de carbone, de préférence 6.

Il est à noter que les atomes de carbone de l'hétérocycle peuvent éventuellement être substitués, dans leur totalité ou pour une partie d'entre eux seulement par des groupes $R^{32}$.

Le nombre de substituants présents sur le cycle dépend du nombre d'atomes dans le cycle et de la présence ou non d'insaturations sur le cycle. Le nombre maximum de substituants susceptibles d'être portés par un cycle, est aisément déterminé par l'homme du métier.

Dans la formule (Ik), n est de préférence 0, 1, 2, 3 ou 4, de préférence encore, n est égal à 0 ou 1.

Des exemples de substituants sont donnés ci-dessous mais cette liste ne présente pas de caractère limitatif.

Le ou les groupes $R^{32}$, identiques ou différents, représentent préférentiellement l'un des groupes suivants :

- un groupe alkyle, linéaire ou ramifié, de $C_1$ à $C_6$, de préférence de $C_1$ à $C_4$ atomes de carbone, tel que méthyle, éthyle, propyle, isopropyle, butyle, isobutyle, sec-butyle, tert-butyle ;
- un groupe alcényle ou alcynyle, linéaire ou ramifié, de $C_2$ à $C_6$, de préférence, de $C_2$ à $C_4$, tel que vinyle, allyle ;
- un groupe alkoxy ou thioéther linéaire ou ramifié, de $C_1$ à $C_6$, de préférence de $C_1$ à $C_4$ tel que les groupes méthoxy, éthoxy, propoxy, isopropoxy, butoxy, un groupe alcényloxy, de préférence, un groupe allyloxy ou un groupe phénoxy ;
- un groupe cyclohexyle, phényle ou benzyle ;
- un groupe ou une fonction tel que hydroxyle, thiol, carboxyle, ester, amide, formyle, acyle, aroyle, amide, urée, isocyanate, thioisocyanate, nitrile, azoture, nitro, sulfone, sulfonique, halogène, pseudohalogène ou trifluorométhyle.

La présente invention s'applique tout particulièrement aux composés répondant à la formule (Ik) dans laquelle le ou les groupes $R^{32}$ représentent plus particulièrement un groupe alkyle ou alkoxy.

Plus particulièrement, le reste A éventuellement substitué représente l'un des cycles suivants :

- un hétérocycle monocyclique comprenant un ou plusieurs hétéroatomes

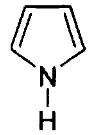
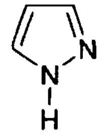
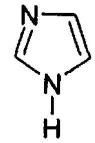
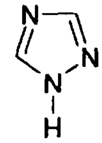
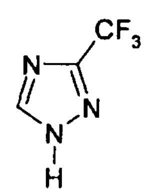

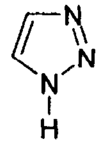
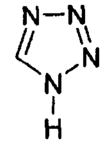
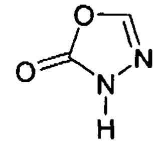
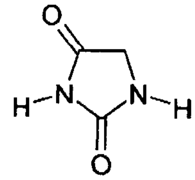
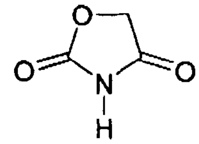

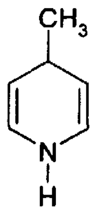 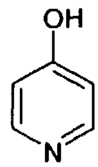 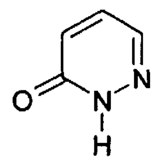 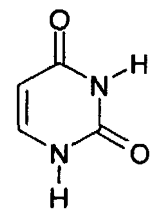

- un bicycle comprenant un carbocycle et un hétérocycle comprenant un ou plusieurs hétéroatomes :

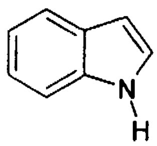 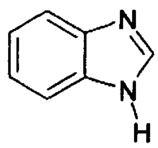 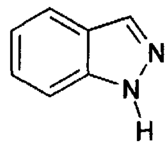 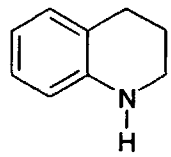 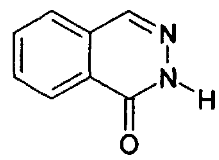

- un tricycle comprenant au moins un carbocycle ou un hétérocycle comprenant un ou plusieurs hétéroatomes :

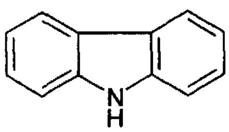 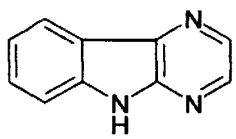 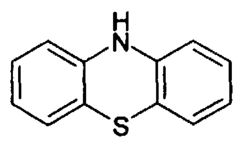 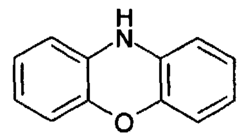

Comme exemples de composés hétérocycliques, on préfère utiliser ceux qui répondent à la formule (Ik) dans laquelle A représente un cycle tel que imidazole, pyrazole, triazole, pyrazine, oxadiazole, oxazole, tétrazole, indole, pyrrole, phtalazine, pyridazine, oxazolidine.
Pour ce qui est des composés nucléophiles susceptibles d'être également mis en oeuvre dans le procédé de l'invention, on peut citer également les composés de type alcool ou de type thiol qui peuvent être représentés par la formule (Im) suivante :

$R^{33}$ - Z (Im)

dans laquelle formule (Im) :

- $R^{33}$ représente un groupe hydrocarboné ayant de 1 à 20 atomes et a la signification donnée pour $R^{11}$ ou $R^{12}$ dans la formule (Ia) ; et
- Z représente un groupe de type $OM^1$ ou $SM^1$ dans lequel $M^1$ représente un atome d'hydrogène ou un cation métallique, de préférence un cation de métal alcalin.

Les composés préférés répondent à la formule (Im) dans laquelle $R^{33}$ représente un groupe hydrocarboné ayant de 1 à 20 atomes de carbone qui peut être un groupe aliphatique acyclique saturé ou insaturé, linéaire ou ramifié ; un groupe carbocyclique ou hétérocyclique saturé, insaturé ou aromatique, monocyclique ou polycyclique; ou un enchaînement quelconque de deux ou plusieurs des groupes précités.
Plus précisément, $R^{33}$ représente préférentiellement un groupe aliphatique acyclique saturé linéaire ou ramifié ayant de préférence de 1 à 12 atomes de carbone, et plus préférentiellement de 1 à 4 atomes de carbone.
L'invention n'exclut pas la présence d'une insaturation sur la chaîne hydrocarbonée telle qu'une ou plusieurs doubles et/ou triples liaisons qui peuvent être conjuguées ou non.
Comme mentionné pour $R^{11}$ défini dans la formule (Ia), la chaîne hydrocarbonée peut être éventuellement interrompue par un hétéroatome, un groupe fonctionnel ou être porteuse d'un ou plusieurs substituants.
Dans la formule (Im), $R^{33}$ peut également représenter un groupe carbocyclique, saturé ou non ayant de préférence 5 ou 6 atomes de carbone dans le cycle ; un groupe hétérocyclique, saturé ou non, comportant notamment 5 ou 6 atomes dans le cycle dont 1 ou 2 hétéroatomes tels que les atomes d'azote, de soufre, d'oxygène ou de phosphore ; un groupe aromatique carbocyclique ou hétérocyclique, monocyclique, de préférence, phényle, pyridyle, furyle, pyrannyle, thiophényle, thiényle, phospholyle, pyrazolyle, imidazolyle, pyrrolyle ; ou un groupe aromatique carbocyclique ou hétérocyclique, polycyclique, condensé ou non, de préférence, naphtyle.

Dès lors que$R^{33}$ comprend un cycle, celui-ci peut être également substitué. La nature du substituant peut être quelconque dans la mesure où il n'interfère pas avec la réaction principale. Le nombre de substituants est généralement au plus de 4 par cycle mais le plus souvent égal à 1 ou 2. On peut se référer à la définition de $R^{32}$ dans la formule (Ik).

L'invention vise également le cas où $R^{33}$ comprend un enchaînement de groupes aliphatiques et/ou cycliques, carbocycliques et/ou hétérocycliques.

Un groupe aliphatique acyclique peut être relié à un cycle par un lien valentiel, un hétéroatome ou un groupe fonctionnel tels que oxy, carbonyle, carboxy, sulfonyle, etc.

On vise plus particulièrement les groupes cycloalkylalkyle, par exemple, cyclohexylalkyle ou les groupes aralkyle ayant de 7 à 12 atomes de carbone, notamment benzyle ou phényléthyle.

L'invention envisage également un enchaînement de groupes carbocycliques et/ou hétérocycliques et plus particulièrement un enchaînement de groupes phényle séparés par un lien valentiel ou un atome ou groupe fonctionnel tel que oxygène, soufre, sulfo, sulfonyle, carbonyle, carbonyloxy, imino, carbonylimino, hydrazo, alkylène($C_1$-$C_{10}$, de préférence en $C_1$-$C_6$)-diimino.

Le groupe aliphatique acyclique, saturé ou insaturé, linéaire ou ramifié peut être éventuellement porteur d'un substituant cyclique. Par « cycle », on entend un cycle carbocyclique ou hétérocyclique, saturé, insaturé ou aromatique.

Les composés préférés de formule (Im) répondent plus particulièrement à la formule générale ($Im_1$) :

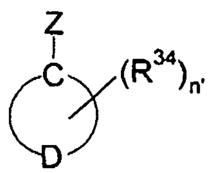

($Im_1$)

dans laquelle :

- D symbolise le reste d'un groupe carbocyclique aromatique, monocyclique ou polycyclique ou un groupe divalent constitué par un enchaînement quelconque de deux ou plusieurs groupes carbocycliques aromatiques monocycliques ;
- $R^{34}$ représente un ou plusieurs substituants, identiques ou différents ;
- Z représente un groupe de type $OM^1$ ou $SM^1$ dans lequel $M^1$ représente un atome d'hydrogène ou un cation métallique, de préférence un cation de métal alcalin ; et
- n' représente 0, 1, 2, 3, 4 or 5.

Comme exemples de substituants $R^{34}$, on peut se référer à ceux identifiés sous $R^{32}$ définis dans la formule (Ik).

Parmi les composés de formule ($im_1$), on met en oeuvre plus particulièrement ceux dont le reste (D) représente :

- un groupe carbocyclique aromatique monocyclique ou polycyclique avec des cycles pouvant former entre eux un système ortho-condensé répondant à la formule ($F_{11}$) :

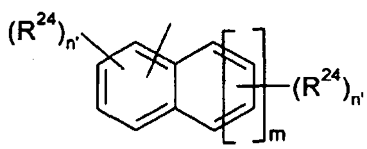

($F_{11}$)

dans ladite formule ($F_{11}$), m représente un nombre égal à 0, 1 ou 2, les symboles $R^{34}$ et n', identiques ou différents, ayant la signification donnée précédemment ;
- un groupe constitué par un enchaînement de deux ou plusieurs groupes carbocycliques aromatiques monocycliques répondant à la formule ($F_{12}$) :

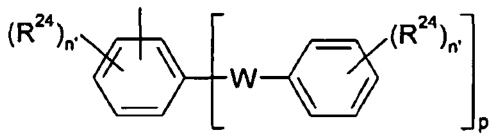

$(F_{12})$

dans ladite formule ($F_{12}$), les symboles $R^{34}$ et n', identiques ou différents, ont la signification donnée précédemment, p est un nombre égal à 0, 1, 2 ou 3, et W représente un lien valentiel, un groupe alkylène ou alkylidène de $C_1$ à $C_4$, de préférence un groupe méthylène ou isopropylidène, ou un groupe fonctionnel tel que oxy, carbonyle, carboxy, sulfonyle, et autres.

Les composés de formule (Im) mis en oeuvre préférentiellement répondent aux formules ($F_{11}$) et ($F_{12}$) dans lesquelles :

- $R^{34}$ représente un atome d'hydrogène, un groupe hydroxyle, un groupe -CHO, un groupe-N02, un groupe alkyle ou alkoxy linéaire ou ramifié ayant de 1 à 6 atomes de carbone, de préférence, de 1 à 4 atomes de carbone, et plus préférentiellement méthyle, éthyle, méthoxy ou éthoxy ;
- W symbolise un lien valentiel, un groupe alkylène ou alkylidène ayant de 1 à 4 atomes de carbone, ou un atome d'oxygène ;
- m est égal à 0 ou 1 ;
- n'est égal à 0, 1 ou 2 ; et
- p est égal à 0 ou 1.

À titre illustratif de composés répondant à la formule(Im), on peut mentionner plus particulièrement :

- ceux dans lesquels le reste D répond à la formule ($F_{11}$) dans laquelle m et n' sont égaux à 0, tels que le phénol, le thiophénol ;
- ceux dans lesquels le reste D répond à la formule($F_{11}$) dans laquelle m est égal à 0 et n' est égal à 1, tels que l'hydroquinone, la pyrocatéchine, la résorcine, les alkylphénols, les alkylthiophénols, les alkoxyphénols, l'aldéhyde salicylique, le *para*-hydroxybenzaldéhyde, le salicylate de méthyle, l'ester méthylique de l'acide *para*-hydroxybenzoïque, les chlorophénols, les nitrophénols, le *para*-acétamidophénol ;
- ceux dans lesquels le reste D répond à la formule ($F_{11}$) dans laquelle m est égal à 0 et n' est égal à 2, tels que les dialkylphénols, la vanilline, l'isovanilline, le 2-hydroxy-5-acétamidobenzaldéhyde, le 2-hydroxy-5-propionamidobenzaldéhyde, le 4-allyloxybenzaldéhyde, les dichlorophénols, la méthylhydroquinone, la chlorohydroquinone ;
- ceux dans lesquels le reste D répond à la formule ($F_{11}$) dans laquelle m est égal à 0 et n' est égal à 3, tels que la 4-bromovanilline, la 4-hydroxy-vanilline, les trialkylphénols, le 2,4,6-trinitrophénol, le 2,6-dichloro-4-nitrophénol, les trichlorophénols, les dichlorohydroquinones, ou le 3,5-diméthoxy-4-hydroxybenzaldéhyde ;
- ceux dans lesquels le reste D répond à la formule($F_{11}$) dans laquelle m est égal à 1 et n' est supérieur ou égal à 1, tels que le dihydroxynaphtalène, le 4-méthoxynapht-1-ol, le 6-bromonapht-2-ol ;
- ceux dans lesquels le reste D répond à la formule ($F_{12}$) dans laquelle p est égal à 1 et n' est supérieur ou égal à 1, tels que le 2-phénoxyphénol, le 3-phénoxyphénol, la phénylhydroquinone, le 4,4'-dihydroxybiphényle, l'isopropylidène-4,4'-diphénol (bisphénol A), le bis(4-hydroxyphényl)-méthane, la bis(4-hydroxyphényl)sulfone, le bis(4-hydroxyphényl)-sulfoxyde, le tétrabromo-bisphénol A.

Parmi les autres composés nucléophiles appartenant à des familles totalement différentes et qui sont susceptibles d'être mis en oeuvre dans le procédé de l'invention, on peut mentionner les composés contenant du phosphore, ainsi que les composés contenant du phosphore et de l'azote, de préférence ceux répondant aux formules suivantes :

| | | | |
|---|---|---|---|
| • | les phosphures de formule | $(R^{35})_2\text{-}P^-$ | (In); |
| • | les phosphines de formule | $(R^{35})_3\text{-}P$ | (Io); |
| • | les azayldiures de phosphonium de formule | $(R^{35})_3\text{-}P^+\text{-}N^{2-}$ | (Ip); |
| • | les azaylures de phosphonium de formule | $(R^{35})_3\text{-}P^+\text{-}N^-\text{-}R^{36}$ | (Iq); |

dans lesquelles formules (In) to (Iq), les groupes $R^{35}$, identiques ou différents, et le groupe $R^{36}$ représentent :

- alkyle en $C_1$-$C_{12}$;

- cycloalkyle en $C_5$-$C_6$ ;
- cycloalkyle en $C_5$-$C_6$ substitué par un ou plusieurs groupes alkyle en $C_1$-$C_4$ ou groupes alkoxy en $C_1$-$C_4$ ;
- phénylalkyle, dont la partie aliphatique possède de 1 à 6 atomes de carbone ;
- phényle ; ou
- phényle substitué par un ou plusieurs groupes alkyle en $C_1$-$C_4$ ou groupes alkoxy en $C_1$-$C_4$, ou par un ou plusieurs atome(s) d'halogène.

Comme composés contenant du phosphore particulièrement préférés, on peut mentionner la tricyclohexylphosphine, la triméthylphosphine, la triéthylphosphine, la tri-*n*-butylphosphine, la tri-*iso*-butylphosphine, la tri-*tert*-butylphosphine, la tribenzylphosphine, la dicyclohexylphénylphosphine, la triphénylphosphine, la diméthylphényl-phosphine, la diéthylphénylphosphine, la di-*tert*-butylphénylphosphine.

D'autres composés susceptibles d'être utilisés dans le procédé de l'invention sont les dérivés hydrocarbonés comprenant un carbone nucléophile.

On peut citer plus particulièrement les anions de type malonate comprenant un groupe -OOC-HC $^-$-COO-.

On peut mentionner les anions malonates d'alkyle de formule (Ir) :

$$R^{37}\text{-OOC-HC}^{-}(R^{38})\text{-COO-R'}^{37} \qquad \text{(Ir)}$$

dans laquelle :

- $R^{37}$ et $R'^{37}$, identiques ou différents, représentent un groupe alkyle contenant de 1 à 12 atomes, de préférence de 1 à 4 atomes ;
- $R^{38}$ est choisi parmi l'atome d'hydrogène ; alkyle en $C_1$-$C_{12}$ cycloalkyle en $C_5$-$C_6$ ; cycloalkyle en $C_5$-$C_6$, substitué par un ou plusieurs alkyle en $C_1$-$C_4$, ou alkoxy en $C_1$-$C_4$ phényle ; phényle substitué par un ou plusieurs alkyle en $C_1$-$C_4$, ou alkoxy en $C_1$-$C_4$ ou par un ou plusieurs atome d'halogène ; phénylalkyle, dont la partie aliphatique contient de 1 à 6 atomes de carbone.

On peut citer également les anions de type malonitrile et malodinitrile comprenant un groupe $R^{37}$-OOC-HC$^-$($R^{38}$)-CN or NC-HC$^-$-CN respectivement, dans lesquels $R^{37}$ et $R^{38}$ possèdent les significations données précédemment.

Conviennent également les composés de type nitrile contenant un groupe $R'^{28}$-CN, dans lequel $R'^{28}$ est de nature quelconque et a la signification donnée pour $R^{11}$ dans la formule (Ia) et représente également un cation métallique, de préférence un cation alcalin, et encore plus préférentiellement le lithium, le sodium ou le potassium.

Comme exemples de nitriles, on peut mentionner l'acétonitrile, le cyanobenzène, éventuellement porteur d'un ou plusieurs substituants sur le cycle benzénique ou la cyanhydrine d'éthanal $CH_3CH(OH)CN$.

Sont également susceptibles d'être mis en oeuvre dans le procédé de l'invention, les composés de type acétylénure, qui peuvent être schématisés par la formule (Is) :

$$R^{39}\text{-C}\equiv\text{C}^{-} \qquad \text{(Is)}$$

dans ladite formule, $R^{39}$ est de nature quelconque et en particulier la signification donnée pour $R^{11}$ dans la formule (Ia), le contre-ion est un cation métallique de préférence le sodium ou le potassium.

Comme exemples plus particuliers, on peut citer l'acétylure ou le diacétylure de sodium ou de potassium.

Comme autres classes de composés nucléophiles pouvant être mis en oeuvre dans le procédé de l'invention, on peut citer les composés de type profène et leurs dérivés, que l'on peut représenter par la formule suivante (It) :

$$R^{40}\text{- HC}^{-}\text{-COO-R}^{41} \qquad \text{(It)}$$

dans laquelle formule :

- $R^{40}$ a la signification donnée pour $R^{11}$ dans la formule (Ia) ; et
- $R^{41}$ représente un groupe alkyle ayant de 1 à 12 atomes de carbone, de préférence de 1 à 4 atomes.

Les composés préférés sont ceux qui répondent à la formule (It) dans laquelle $R^{40}$ représente un groupe alkyle ayant de 1 à 12 atomes de carbone, un groupe cycloalkyle ayant 5 ou 6 atomes de carbone et un groupe aryle ayant 6 ou 12 atomes de carbone, ou un hétérocycle azoté ayant 5 ou 6 atomes.

On peut également mentionner à titre de composés nucléophiles, ceux comprenant un carbanion et dont le contre-ion est un métal et répondant aux formules suivantes :

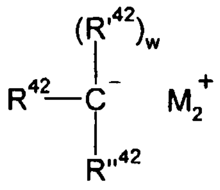

(Iu$_1$)

;

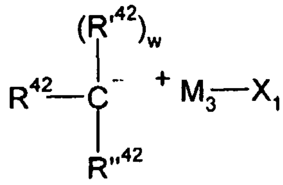

(Iu$_2$)

;

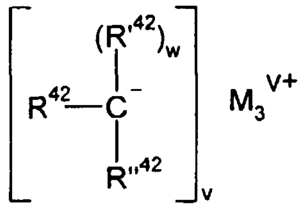

(Iu$_3$)

dans lesquelles :

- le groupe $R^{42}$ représente :
  - un groupe alkyle ayant de 1 à 12 atomes de carbone ;
  - un groupe cycloalkyle ayant 5 ou 6 atomes de carbone ;
  - un groupe cycloalkyle ayant 5 ou 6 atomes de carbone, substitué par un ou plusieurs radicaux alkyle ayant de 1 à 4 atomes de carbone, et/ou alkoxy ayant de 1 ou 4 atomes de carbone ;
  - un groupe phénylalkyle dont la partie aliphatique comporte de 1 à 6 atomes de carbone ;
  - un groupe phényle ;
  - un groupe phényle substitué par un ou plusieurs radicaux alkyle ayant de 1 à 4 atomes de carbone ou alkoxy ayant de 1 à 4 atomes de carbone ou par un ou plusieurs atomes d'halogène ; ou
  - un groupe hétérocyclique saturé, insaturé ou aromatique, comprenant de préférence 5 ou 6 atomes et comprenant comme hétéroatome(s), le soufre, l'oxygène ou l'azote ;
- les groupes $R'^{42}$ et $R''^{42}$ représentent un atome d'hydrogène ou un groupe tel que $R^{42}$ ;
- deux des groupes $R^{42}$, $R'^{42}$ et $R''^{42}$ peuvent être reliés ensemble pour former un carbocycle ou un hétérocycle saturé, insaturé ou aromatique ayant de préférence 5 ou 6 atomes de carbone ;
- $M_2$ représente un élément métallique du groupe (IA) de la classification périodique des éléments ;
- $M_3$ représente un élément métallique des groupes (IIA) et (IIB) de la classification périodique des éléments ;
- $X_1$ représente un atome de chlore ou de brome ;
- v est la valence du métal $M_3$ ; et
- w est égal à 0 ou 1.

Dans le présent texte, on se réfère ci-dessus et dans la suite à la Classification périodique des éléments publiée dans le Bulletin de la Société Chimique de France, n° 1 (1966).

Parmi les composés de formules (Iu$_1$) à (Iu$_3$), ceux qui sont préférés font intervenir comme métaux, le lithium, le sodium, le magnésium ou le zinc et $X_1$ représente un atome de chlore.

Les groupes $R^{42}$, $R'^{42}$ et $R''^{42}$ sont avantageusement un groupe alkyle en $C_1$-$C_4$, un groupe cyclohexyle ou phényle ; ou lesdits groupes peuvent former un cycle benzénique, cyclopentadiénique, pyridinique ou thiophénique.

Comme exemples, on peut citer le n-butyllithium, le t-butyllithium, le phényllithium, le bromure ou le chlorure de méthyl- ou éthyl- ou phényl-magnésium, le diphénylmagnésium, le diméthyl- ou le diéthyl-zinc, le cyclopentadiènezinc, le chlorure ou le bromure d'éthylzinc.

Comme autres composés nucléophiles susceptibles d'être mis en oeuvre, on peut faire appel aux acides boroniques ou leurs dérivés, et plus particulièrement à ceux répondant à la formule (Iv) suivante :

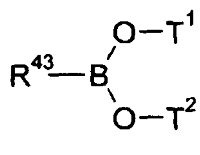

(Iv)

dans laquelle :

- $R^{43}$ représente un groupe carbocyclique ou hétérocyclique, aromatique, monocyclique ou polycyclique; et
- $T^1$ et $T^2$ identiques ou différents, représentent un atome d'hydrogène, un groupe aliphatique saturé ou insaturé, linéaire ou ramifié, ayant de 1 à 20 atomes de carbone ou un groupe $R^{43}$.

Plus précisément, l'acide boronique ou son dérivé répond à la formule (Iv) dans laquelle le groupe $R^{43}$ représente un groupe carbocyclique ou hétérocyclique aromatique. Ainsi, $R^{43}$ peut prendre les significations données précédemment pour D dans la formule ($Im_1$). Toutefois, $R^{43}$ représente plus particulièrement un groupe carbocyclique tel qu'un groupe phényle, naphtyle ou un groupe hétérocyclique tel qu'un groupe pyrrolyle, pyridyle, pyrimidinyle, pyridazinyle, pyrazinyle, 1,3-thiazolyle, 1,3,4-thiadiazolyle ou thiényle.

Le cycle aromatique peut être également substitué. Le nombre de substituants est généralement au plus de 4 par cycle mais le plus souvent égal à 1 ou 2. On peut se référer à la définition de $R^{32}$ de la formule (Ik) pour des exemples de substituants.

Les substituants préférés sont les groupes alkyle ou alkoxy ayant de 1 à 4 atomes de carbone, un groupe amino, un groupe nitro, un groupe cyano, un atome d'halogène ou un groupe trifluorométhyle.

En ce qui concerne $T^1$ et $T^2$, qui peuvent être identiques ou différents, ils représentent plus particulièrement un atome d'hydrogène ou un groupe aliphatique acyclique, linéaire ou ramifié, ayant de 1 à 20 atomes de carbone, saturé ou comprenant une ou plusieurs insaturations sous forme de double(s) et/ou de triple(s) liaison(s) sur la chaîne, de préférence de 1 à 3 insaturations, qui sont de préférence des doubles liaisons simples ou conjuguées.

$T^1$ et $T^2$ représentent préférentiellement un groupe alkyle ayant de 1 à 10 atomes de carbone, de préférence de 1 à 4 atomes de carbone, ou un groupe alcényle ayant de 2 à 10 atomes de carbone, de préférence un groupe vinyle ou 1-méthylvinyle.

$T^1$ et $T^2$ peuvent en outre prendre les significations données pour $R^{43}$ et en particulier tout cycle peut également porter un substituant tel que décrit précédemment.

$R^{43}$ représente préférentiellement un groupe phényle.

On ne sortira pas du cadre de la présente invention à faire appel aux dérivés des acides boroniques tels que les anhydrides et les esters et plus particulièrement les esters d'alkyle ayant de 1 à 4 atomes de carbone.

Comme exemples d'acides arylboroniques, on peut citer notamment l'acide benzèneboronique, l'acide 2-thiophèneboronique, l'acide 3-thiophèneboronique, l'acide 4-méthylbenzèneboronique, l'acide 3-méthylthiophène-2-boronique, l'acide 3-aminobenzèneboronique, l'acide hémisulfate 3-aminobenzèneboronique, l'acide 3-fluorobenzèneboronique, l'acide4-fluorobenzèneboronique, l'acide 2-formylbenzèneboronique, l'acide 3-formylbenzèneboronique, l'acide 4-formylbenzèneboronique, l'acide 2-méthoxybenzèneboronique, l'acide3-méthoxybenzèneboronique, l'acide 4-méthoxybenzèneboronique, l'acide 4-chlorobenzèneboronique, l'acide 5-chlorothiophène-2-boronique, l'acide benzo[b] furane-2-boronique, l'acide 4-carboxybenzèneboronique, l'acide 2,4,6-triméthylbenzèneboronique, l'acide 3-nitrobenzèneboronique, l'acide 4-(méthylthio)benzèneboronique, l'acide 1-naphtalèneboronique, l'acide 2-naphtalèneboronique, l'acide 2-méthoxy-1-naphtalèneboronique, l'acide 3-chloro-4-fluorobenzèneboronique, l'acide 3-acétamidobenzèneboronique, l'acide 3-trifluorométhylbenzèneboronique, l'acide 4-trifluorométhylbenzèneboronique, l'acide 2,4-dichlorobenzèneboronique, l'acide 3,5-dichlorobenzèneboronique, l'acide 3,5-bis-(trifluorométhyl)benzèneboronique, l'acide 4,4'-biphényldiboronique, et les esters et les anhydrides de ces acides.

La présente description fournit des listes de composés nucléophiles mais ne sont en aucun cas limitatives et tout type de composé nucléophile peut être envisagé.

Comme indiqué précédemment, et selon le procédé de la présente invention, une liaison -C-C ou -C-HE- (où HE représente O, S, P, N, Si, B, et autres) peut être créée par réaction d'un composé nucléophile, tel que ceux qui viennent d'être définis plus haut, avec un composé porteur d'un groupement partant, en particulier un composé comprenant une liaison insaturée située en position a d'un groupe partant.

Plus précisément, le composé porteur d'un groupement partant est représenté par la formule générale (II) :

$$X\text{-}R^0 \qquad (II)$$

formule dans laquelle $R^0$ représente un groupe hydrocarboné contenant de 2 à 20 atomes de carbone et possède éventuellement au moins une insaturation (une double ou une triple liaison) située en position a d'un groupe partant X, ou représente un groupe carbocyclique et/ou hétérocyclique, aromatique, monocyclique ou polycyclique.

Conformément au procédé de l'invention, on fait réagir le composé de formule(I) avec un composé de formule (II) dans laquelle :

- $R^0$ représente un groupe hydrocarboné aliphatique comprenant éventuellement une double liaison et/ou une triple liaison en position $\alpha$ du groupe partant ou un groupe hydrocarboné cyclique comprenant une insaturation portant le groupe partant ; ou
- $R^0$ représente un groupe carbocyclique et/ou hétérocyclique, aromatique, monocyclique ou polycyclique;
- X représente un groupe partant, de préférence un atome d'halogène ou un groupe ester sulfonique de formule $-OSO_2-R^e$, dans lequel $R^e$ est un groupe hydrocarboné.

Le composé de formule (II) sera désigné par la suite par « composé porteur d'un groupe partant ».

Dans la formule du groupe ester sulfonique, $R^e$ est un groupe hydrocarboné d'une nature quelconque. Toutefois, étant donné que X est un groupe partant, il est intéressant d'un point de vue économique que $R^e$ soit d'une nature simple, et représente plus particulièrement un groupe alkyle linéaire ou ramifié ayant de 1 à 4 atomes de carbone, de préférence, un groupe méthyle ou éthyle ; mais il peut également représenter par exemple un groupe phényle ou tolyle ou un groupe trifluorométhyle.

Parmi les groupes X, le groupe préféré est un groupe triflate, ce qui correspond à un groupe $R^e$ représentant un groupe trifluorométhyle.

Comme groupes partants préférés, on choisit de préférence, un atome de brome ou de chlore.

Les composés de formule (II) visés tout particulièrement selon le procédé de l'invention peuvent être classés en trois groupes :

(*1*) les composés de type aliphatique porteurs d'une double liaison et que l'on peut représenter par la formule (IIa) :

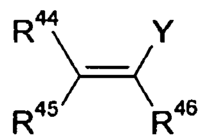

**(IIa)**

dans laquelle :

- $R^{44}$, $R^{45}$ et $R^{46}$, identiques ou différents représentent un atome d'hydrogène ou un groupe hydrocarboné ayant de 1 à 20 atomes de carbone qui peut être un groupe aliphatique saturé ou insaturé, linéaire ou ramifié ; un groupe carbocyclique ou hétérocyclique saturé, insaturé ou aromatique, monocyclique ou polycyclique; un enchaînement quelconque de groupe(s) aliphatique(s) et/ou carbocyclique(s) et/ou hétérocyclique(s) tels que précités ; et
- X symbolise le groupe partant tel que précédemment défini ;

(*2*) les composés de type aliphatique portant une triple liaison et que l'on peut représenter par la formule (IIb) :

$$R^{44}\text{-C}\equiv\text{C-X} \qquad \text{(IIb)}$$

dans laquelle :

- $R^{44}$ a la signification donnée dans la formule (IIa) ; et
- X représente un groupe partant tel que précédemment défini ;

(*3*) les composés de type aromatique que l'on désigne par la suite par « composé halogénoaromatique » et que l'on peut représenter par la formule (IIc) :

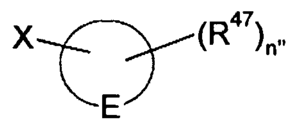

**(IIc)**

dans laquelle :

- E symbolise le reste d'un cycle formant tout ou partie d'un système carbocyclique et/ou hétérocyclique, aromatique, monocyclique ou polycyclique ;
- $R^{47}$, identiques ou différents, représentent des substituants sur le cycle ;
- X représente un groupe partant tel que précédemment défini ; et
- n" représente le nombre de substituants sur le cycle.

L'invention s'applique aux composés insaturés répondant aux formules (IIa) et (IIb), dans lesquelles $R^{44}$ représente préférentiellement un groupe aliphatique acyclique, linéaire ou ramifié, saturé, ayant de préférence de 1 à 12 atomes de carbone.

L'invention n'exclut pas la présence d'une autre liaison insaturée sur la chaîne hydrocarbonée, telle qu'une

triple liaison ou bien une ou plusieurs doubles liaisons, qui peuvent être conjuguées ou non.

La chaîne hydrocarbonée peut être éventuellement interrompue par un hétéroatome (par exemple, oxygène ou soufre) ou par un groupe fonctionnel, dans la mesure où celui-ci ne réagit pas, et l'on peut citer en particulier un groupe tel que notamment -CO-.

La chaîne hydrocarbonée peut être éventuellement porteuse d'un ou plusieurs substituants dans la mesure où ils ne réagissent pas dans les conditions réactionnelles, et l'on peut mentionner notamment un atome d'halogène, un groupe nitrile ou un groupe trifluorométhyle.

Le groupe aliphatique acyclique, saturé ou insaturé, linéaire ou ramifié peut éventuellement être porteur d'un substituant cyclique. Par « cycle », on entend un cycle carbocyclique ou hétérocyclique, saturé, insaturé ou aromatique.

Le groupe aliphatique acyclique peut être relié au cycle par un lien valentiel, un hétéroatome ou un groupe fonctionnel, tels que oxy, carbonyle, carboxy, sulfonyle, etc.

Comme exemples de substituants cycliques, on peut envisager des substituants cycloaliphatiques, aromatiques ou hétérocycliques, notamment cycloaliphatiques comprenant 6 atomes de carbone dans le cycle, ou des substituants benzéniques, ces substituants cycliques étant eux-mêmes éventuellement porteurs d'un substituant quelconque, dans la mesure où ils ne gênent pas les réactions intervenant dans le procédé de l'invention. On peut mentionner en particulier, les groupes alkyle ou alkoxy ayant de 1 à 4 atomes de carbone.

Parmi les groupes aliphatiques porteurs d'un substituant cyclique, on vise plus particulièrement les groupes aralkyle ayant de 7 à 12 atomes de carbone, notamment benzyle ou phényléthyle.

Dans les formules (IIa) et (IIb), $R^{44}$ peut également représenter un groupe carbocyclique, saturé ou non, ayant de préférence 5 ou 6 atomes de carbone dans le cycle, de préférence cyclohexyle ; un groupe hétérocyclique, saturé ou non, comportant notamment 5 ou 6 atomes dans le cycle dont 1 ou 2 hétéroatomes tels que les atomes d'azote, de soufre et d'oxygène ; un groupe carbocylique aromatique, monocyclique, de préférence phényle, ou polycyclique condensé ou non, de préférence naphtyle.

Quant à $R^{45}$ et $R^{46}$, ils représentent préférentiellement un atome d'hydrogène ou un groupe alkyle ayant de 1 à 12 atomes de carbone, un groupe phényle ou un groupe aralkyle ayant de 7 à 12 atomes de carbone, de préférence un groupe benzyle.

Dans les formules (IIa) et ou (IIb), $R^{44}$, $R^{45}$ et $R^{46}$ représentent plus particulièrement un atome d'hydrogène, ou bien $R^{44}$, représente un groupe phényle et $R^{45}$ et $R^{46}$ représentent un atome d'hydrogène.

Il doit être noté que $R^{34}$ et $R^{35}$ peuvent également représenter un groupe fonctionnel, dans la mesure où ils n'interagissent pas dans la réaction de couplage. À titre d'exemples de tels groupes fonctionnels, on peut mentionner les groupes amido, ester, éther, cyano.

Comme exemples de composés répondant aux formules (IIa) et (IIb), on peut citer notamment le chlorure ou le bromure de vinyle ou les β-bromo- ou β-chlorostyrène, ou le bromoalcyne ou l'iodoalcyne.

L'invention s'applique notamment aux composés halogénoaromatiques répondant à la formule(IIc) dans laquelle E est le reste d'un composé cyclique, ayant de préférence au moins 4 atomes dans le cycle, de préférence 5 ou 6, éventuellement substitué, et représentant au moins l'un des cycles suivants :

- un carbocycle aromatique, monocyclique ou polycyclique, c'est-à-dire un composé constitué par au moins 2 carbocycles aromatiques et formant entre eux des systèmes *ortho*- ou *ortho*- et *péri*-condensés ou un composé constitué par au moins 2 carbocycles dont l'un seul d'entre eux est aromatique et formant entre eux des systèmes *ortho*- ou *ortho*- et *péri*-condensés ;
- un hétérocycle aromatique, monocyclique comportant au moins un des hétéroatomes P, O, N et/ou S, ou un hétérocycle aromatique polycyclique, c'est-à-dire un composé constitué par au moins 2 hétérocycles contenant au moins un hétéroatome dans chaque cycle dont au moins l'un des deux cycles est aromatique et formant entre eux des systèmes *ortho*- ou *ortho*- et *péri*-condensés ; ou un composé constitué par au moins un carbocycle et au moins un hétérocycle dont au moins l'un des cycles est aromatique et formant entre eux des systèmes *ortho*- ou *ortho*- et *péri*-condensés ;

Plus particulièrement, le reste E éventuellement substitué représente préférentiellement le reste d'un carbocycle aromatique, tel que le benzène, d'un bicycle aromatique comprenant deux carbocycles aromatiques, tel que le naphtalène, ou un bicycle partiellement aromatique comprenant deux carbocycles dont l'un deux est aromatique, tel que le tétrahydro-1,2,3,4-naphtalène.

L'invention envisage également le fait que E peut représenter le reste d'un hétérocycle dans la mesure où il est plus électrophile que le composé répondant à la formule (Ik).

Comme exemples particuliers, on peut citer un hétérocycle aromatique tel que le furane, la pyridine ; un bicycle aromatique comprenant un carbocycle aromatique et un hétérocycle aromatique, tel que le benzofurane, la benzopyridine ; un bicycle partiellement aromatique comprenant un carbocycle aromatique et un hétérocycle, tel que le méthylènedioxybenzène ; un bicycle aromatique comprenant deux hétérocycles aromatiques, tel que la 1,8-naphtylpyridine ; un bicycle partiellement aromatique comprenant un carbocycle et un hétérocycle aromatique, tel que la tétrahydro-5,6,7,8-quinoléine.

Dans le procédé de l'invention, on met en oeuvre préférentiellement un composé halogénoaromatique de formule (IIc) dans laquelle E représente un noyau aromatique, de préférence un noyau benzénique ou naphtalénique.

Le composé aromatique de formule (IIc) peut être porteur d'un ou plusieurs substituants.

Dans le présent texte, on entend par « plusieurs », généralement, moins de 4 substituants $R^{47}$ sur un noyau aromatique. On pourra se référer aux définitions du groupe $R^{42}$, dans la formue (Ik), pour divers exemples de substituants.

$R^{47}$ peut également représenter un hétérocycle saturé, insaturé ou aromatique comprenant 5 ou 6 atomes et comprenant soufre, oxygène et/ou azote, en tant qu'hétéroatome(s). À cet égard, on peut citer en particulier les groupes pyrazolyle ou imidazolyle.

Dans la formule (IIc), n" est égal à 0, 1, 2, 3 ou 4, de préférence, égal à 1 ou 2.

Comme exemples de composés répondant à la formule(IIc), on peut citer notamment le *para*-chlorotoluène, le para-bromoanisole, le *para*-bromotrifluorobenzène.

La quantité du composé porteur d'un groupe partant de formule (II), de préférence de formule (IIa) ou (IIb) ou (IIc), mise en oeuvre est généralement exprimée par rapport à la quantité du composé nucléophile est peut varier dans de grandes proportions ; généralement elle est voisine de la stoechiométrie.

Ainsi, le rapport entre le nombre de moles du composé porteur du groupe partant et le nombre de moles du composé nucléophile varie le plus souvent entre 0,1 et 2,0, de préférence entre 0,5 et 1,5, de préférence encore entre 0,8 et 1,2, et plus préférentiellement entre 0,9 et 1,1.

Conformément au procédé de l'invention, on fait réagir le composé nucléophile, répondant de préférence aux formules (Ia) à (Iv), avec un composé porteur d'un groupe partant, répondant de préférence à la formule (II), de préférence encore aux formules (IIa) ou (IIb) ou (IIc), en présence d'une quantité efficace d'un système catalytique comprenant un complexe cuivre/phosphine cyclovinylique tel que défini selon l'invention.

Il a en effet été découvert qu'il est possible de réaliser des réactions de couplage, telles que définies *supra,* entre des composés nucléophiles et des composés porteurs d'un groupe partant, en utilisant un système catalytique comprenant un complexe cuivre/phosphine cyclovinylique tel que défini selon l'invention.

Comme exemples de systèmes catalytiques susceptibles d'être mis en oeuvre, on peut citer ceux comprenant au moins un complexe cuivre/phosphine cyclovinylique, tels que ceux définis *supra* sous l'appellation générique Pho-CyV/Cu, c'est-à-dire des complexes du cuivre avec au moins une phosphine cyclovinylique de formule (1) comme définie précédemment.

Comme exemple de complexe de type Pho-CyV/Cu particulièrement adapté aux réactions de couplage définies précédemment, on peut citer le complexe monomère pyridylvinyldiphénylphosphine/iodure de cuivre $[Py-CH=CH-PPh_2]_2CuI$, où Ph représente le radical phényle. Comme indiqué également précédemment, le complexe Pho-CyV/Cu peut être préparé *in situ,* dans le milieu réactionnel de la réaction de couplage.

La quantité totale de catalyseur complexe cuivre/phosphine cyclovinylique mise en oeuvre dans le procédé de l'invention, exprimée par le rapport molaire entre le nombre de moles de complexe exprimé en cuivre, et le nombre de moles de composé porteur d'un groupe partant, varie généralement entre 0,001 et 0,5, de préférence entre 0,01 et 0,1.

Selon une variante, l'invention n'exclut pas que le cuivre soit associé à une faible quantité d'un autre élément métallique désigné par M. L'élément métallique M est choisi dans le groupe (VIII), (IB) et (IIB) de la classification périodique des éléments, telle que définie plus haut.

Comme exemples de métaux M, on peut citer l'argent, le palladium, le cobalt, le nickel, le fer et/ou le zinc.

On utilise avantageusement un mélange comprenant du palladium et du cuivre. Le palladium peut être apporté sous forme d'un métal finement divisé ou sous forme d'un dérivé inorganique tel qu'un oxyde ou un hydroxyde. Il est possible de faire appel à un sel minéral de préférence, nitrate, sulfate, oxysulfate, halogénure, oxyhalogénure, silicate, carbonate, ou à un dérivé organique de préférence, cyanure, oxalate, acétylacétonate ; alcoolate et encore plus préférentiellement méthylate ou éthylate ; carboxylate et encore plus préférentiellement acétate.

Peuvent être également mis en oeuvre des complexes, notamment chlorés ou cyanés de palladium et/ou de métaux alcalins, de préférence sodium, potassium ou d'ammonium. À titre d'exemples de composés susceptibles d'être mis en oeuvre pour la préparation des catalyseurs de l'invention, on peut citer notamment le bromure de palladium(II), le chlorure de palladium(II), l'iodure de palladium(II), le cyanure de palladium(II), le nitrate de palladium (II) hydraté, l'oxyde de palladium(II), le sulfate de palladium(II)dihydraté, l'acétate de palladium(II), le propionate de palladium(II), le butyrate de palladium(II), le benzoate de palladium.

Comme exemples spécifiques de dérivés du nickel, on peut citer les halogénures de nickel(II), tels que chlorure, bromure ou iodure de nickel(II) ; le sulfate de nickel(II) ; le carbonate de nickel(II) ; les sels d'acides organiques comprenant de 1 à 18 atomes de carbone tels que notamment acétate, propionate ; les complexes de nickel(II) tels que l'acétylacétonate de nickel(II), le dibromo-bis-(triphénylphosphine) de nickel (II), le dibromo-bis (bipyridine) de nickel (II) ; les complexes de nickel(0) tels que le bis-(cycloocta-1,5-diène) de nickel(0), le bis-diphénylphosphinoéthane de nickel(0).

On peut également faire appel à des dérivés à base de fer ou de zinc, généralement sous la forme d'oxyde, d'hydroxydes ou de sels tels que les halogénures, de préférence le chlorure, les nitrates et les sulfates.

La quantité de l'élément métallique M représente moins de 50 %, de préférence moins de 25, avantageusement moins de 10 % molaire par rapport au nombre de moles de cuivre.

Encore plus préférentiellement, on met en oeuvre un catalyseur sous forme de complexe avec une phosphine cyclovinylique ne comprenant que du cuivre.

Intervint également dans le procédé de l'invention, une base dont la fonction est de piéger le groupe partant.

Les bases convenables pour le procédé de l'invention peuvent être caractérisées par leur pKa, qui est avantageusement au moins supérieur ou égal à 2, de préférence compris entre 4 et 30.

Le pKa est défini comme la constante de dissociation ionique du couple acide/base, lorsque l'eau est utilisée comme solvant. Pour le choix d'une base ayant un pKa tel que défini par l'invention, on peut se reporter, entre autres, au Handbook of Chemistry and Physics, 66$^{e}$ édition, pp. D-161 et D-162.

Parmi les bases utilisables, on peut citer entre autres, les bases minérales telles que les carbonates, hydrogénocarbonates, phosphates ou hydroxydes de métaux alcalins, de préférence de sodium, de potassium, de césium, ou de métaux alcalino-terreux, de préférence de calcium, baryum ou magnésium.

On peut également faire appel aux hydrures de métaux alcalins, de préférence l'hydrure de sodium ou aux alcoolates de métaux alcalins, de préférence de sodium ou de potassium, et plus préférentiellement au méthylate, éthylate ou *tert*-butylate de sodium.

Conviennent également des bases organiques comme les amines tertiaires et l'on peut citer plus particulièrement la triéthylamine, la tri-n-propylamine, la tri-n-butylamine, la méthyldibutylamine, la méthyl-dicyclohexylamine, l'éthyldi-isopropylamine, la N,N-diéthylcyclohexylamine, la pyridine, la diméthylamino-4pyridine, la N-méthylpipéridine, la N-éthylpipéridine, la N-n-butylpipéridine, la 1,2-diméthylpipéridine, la N-méthylpyrrolidine, et la 1,2-diméthylpyrrolidine.

Parmi les bases, on choisit préférentiellement les carbonates de métaux alcalins.

La quantité de base mise en oeuvre est telle que le rapport entre le nombre de moles de base et le nombre de moles du composé portant le groupe partant varie préférentiellement entre 1 et 4, de préférence aux environs de 2.

La réaction de couplage, notamment d'arylation ou de vinylation ou d'alcynation, conduite selon l'invention est le plus souvent conduite en présence d'un solvant organique. On fait de préférence appel à un solvant organique, qui ne réagit pas dans les conditions de la réaction.

Comme types de solvants mis en oeuvre dans le procédé de l'invention, on fait appel de préférence à un solvant organique polaire et préférentiellement un solvant organique polaire aprotique.

Des exemples, non limitatifs, de solvants qui peuvent être mis en oeuvre dans le procédé de l'invention, sont choisis parmi :

- les carboxamides linéaires ou cycliques comme le N,N-diméthyl-acétamide (DMAC), le N,N-diéthylacétamide, le diméthylformamide (DMF), le diéthylformamide ou la 1-méthyl-2-pyrrolidinone(NMP) ;
- le diméthylsulfoxyde (DMSO) ;
- l'hexaméthylphosphotriamide (HMPT) ;
- la tétraméthylurée ;
- les composés nitrés tels que le nitrométhane, le nitroéthane, le 1-nitropropane, le 2-nitropropane ou leurs mélanges, le nitrobenzène ;
- les nitriles aliphatiques ou aromatiques comme l'acétonitrile, le propionitrile, le butanenitrile, l'iso-butanenitrile, le pentanenitrile, le 2-méthylglutaronitrile, l'adiponitrile ;
- la tétraméthylène sulfone (sulfolane) ;
- les carbonates organiques tels que le diméthylcarbonate, le di-isopropylcarbonate, le di-n-butylcarbonate ;
- les esters d'alkyle tels que l'acétate d'éthyle ou d'isopropyle ;
- les hydrocarbures aromatiques halogénés ou non, tels que le chlorobenzène ou le toluène ;
- les cétones telles que l'acétone, la méthyléthylcétone, la méthylisobutylcétone, la cyclopentanone, la cyclohexanone ;
- les hétérocycles azotés tels que la pyridine, la picoline et les quinoléines.

On peut également utiliser un mélange de deux ou plusieurs solvants, notamment choisis parmi ceux listés ci-dessus.

Les solvants préférés sont les carboxamides, tels que le DMF, l'acétonitrile, le DMSO, la NMP et le DMAC.

La quantité de solvant organique à mettre en oeuvre est déterminée en fonction de la nature du solvant organique choisi. Elle est déterminée de telle sorte que la concentration du composé porteur du groupe partant dans le solvant organique soit de préférence comprise entre 5% et 40% en poids.

Selon une variante, le composé nucléophile et/ou le composé porteur du groupe partant peu(ven)t être utilisé (s) comme solvant(s) de la réaction, auquel cas il n'est pas nécessaire d'ajouter un solvant supplémentaire au milieu

réactionnel.

La réaction de couplage, c'est-à-dire de création de liaison C-C ou C-HE selon le procédé de l'invention est généralement conduite à une température qui est avantageusement située entre 0˚C et 200˚C, de préférence, entre 20˚C et 170˚C, et encore plus préférentiellement entre 25˚C et 140˚C.

Ladite réaction est généralement mise en oeuvre sous pression atmosphérique, mais des pressions plus élevées pouvant atteindre par exemple 10 bars peuvent être également utilisées.

D'un point de vue pratique, la réaction est simple à mettre en oeuvre.

L'ordre de mise en oeuvre des réactifs n'est pas critique. De préférence, on charge le système catalytique complexe cuivre/phosphine cyclovinylique, le composé nucléophile, de préférence de formule (la) à (Iv), la base, le composé porteur du groupe partant, de préférence de formule (II), de préférence encore de formule (IIa), (IIb) ou (IIc), et éventuellement le solvant organique. Le milieu réactionnel est alors porté à la température souhaitée.

Comme mentionné précédemment, on peut, en variante, introduire le cuivre, et au moins une phosphine cyclovinylique en tant que ligand, afin de former le complexe cuivre phosphine cyclovinylique *in situ.*

On contrôle l'avancement de la réaction en suivant la disparition du composé porteur du groupe partant. En fin de réaction, on obtient un produit du type $R\text{-}Q\text{-}R^0$, R, Q et $R^0$ étant tels que définis précédemment.

On récupère le composé obtenu selon les techniques classiques utilisées, notamment par cristallisation dans un solvant organique.

Comme exemples plus spécifiques de tels solvants organiques utilisables dans l'étape de cristallisation, on peut mentionner notamment les hydrocarbures aliphatiques ou aromatiques, halogénés ou non, les carboxamides et les nitriles. On peut citer notamment le cyclohexane, le toluène, le diméthylformamide, l'acétonitrile.

On donne ci-après des exemples de réalisation de l'invention. Ces exemples sont donnés à titre indicatif, sans caractère limitatif.

## Exemples

Dans les exemples qui suivent, les techniques d'analyse suivantes ont été utilisées.

L'acquisition des *spectres* RMN du proton ($^1H$), du phosphore ($^{31}P$) et du carbone ($^{13}C$) a été effectuée à 20˚C sur des spectromètres, Brücker AC 200, DRX-250 et DRX-400, dont les fréquences fondamentales pour le $^1H$ sont respectivement 81,01, 200,13 et 400,13 MHz. Les déplacements chimiques du $^1H$, du $^{31}P$ et du $^{13}C$, exprimés en ppm, sont référencés par rapport au signal du tétraméthylsilane (TMS). Sauf cas particulier, les spectres $^{13}C$ ont été enregistrés avec irradiation des hydrogènes. Les constantes de couplage sont exprimées en Hz.

Les spectres RMN $^1H$ sont présentés de la façon suivante : Échelle $\delta$ (ppm), (multiplicité, nombre d'atomes d'hydrogène, attribution, constante de couplage en Hz). Les numéros portés par les atomes d'hydrogène dans les indexations sont ceux des atomes de carbone auxquels ils sont liés. Les multiplicités sont indiquées, quand les spectres sont du premier ordre, sous forme d'abréviations pouvant être combinées entre elles (s = singulet, d = doublet, t = triplet, q = quadruplet, quint. = quintuplet, sext. = sextuplet, sept. = septuplet, m = multiplet). La multiplicité des signaux en RMN $^{13}C$ n'est indiquée que lorsque le signal ne se présente pas sous la forme d'un singulet (couplage C-P par exemple).

Les analyses GC/MS ont été réalisées sur un chromatographe Agilent Technologies 6890 N couplé à un détecteur de masse Agilent 5973 N à dynode haute énergie (filtre quadripolaire, mode d'ionisation : impact électronique), d'une colonne capillaire apolaire HP5-MS (longueur 30 m, diamètre intérieur 0,25 mm, film 5 % diphényldiméthylpolysiloxane d'épaisseur 0,25 $\mu$m).

Les conditions d'analyse sont les suivantes : température de l'injecteur : 250 ˚C, température de l'interface : 280 ˚C, source d'ions : 230 ˚C, détecteur quadrupolaire : 150 ˚C, gaz vecteur : Hélium (0,5 bar).

*Les spectres* IR ont été enregistrés sur un spectrophotomètre Nicolet 210 à transformée de Fourier (détecteur DTGS). Les produits solides ont été analysés sous forme de pastilles de KBr. Les produits liquides ont été enregistrés sous forme de film déposé entre deux pastilles de KBr ou sous forme d'une solution injectée dans une cellule. L'intensité du pic d'absorption le plus intense est arbitrairement fixée à 100% de transmittance. Celle des autres bandes est estimée relativement à cette dernière ; elle est désignée par les abréviations suivantes : FF (très forte : 80 à 100% de l'intensité du pic d'absorption le plus intense), F (forte : 60 à 80%), m (moyenne : 40 à 60%), f (faible : 20 à 40%), ou ff (très faible : 0 à 20%).

Les analyses de spectrométrie de masse basse résolution et les analyses MSMS ont été effectuées sur un spectromètre JEOL JMS-DX300 (mode d'ionisation : FAB, tension d'accélération : 3 Kev, gaz ionisant : xénon) ou sur un appareil Micro-Mass (détecteur Q-TOF, mode ES+, tension du cône : 2 à 30 V, tension de collision : 25 V).

La détermination des points de fusion, donnés sans correction, a été réalisée sur un appareil Büchi Melting Point B-540 à capillaires.

Les chromatographies sur couche mince ont été réalisées sur des plaques d'aluminium recouvertes d'alumine (neutre, type E) ou de silice 60 F Merck. Les Rf des produits isolés ont été calculés après élution sur plaque de silice, sauf indication contraire.

Les purifications chromatographiques ont été réalisées par chromatographie sur colonne de silice 60 A C.C, SDS (35-70 $\mu$m ou 70-200 $\mu$m) ou sur alumine 90 Merck (63-200 $\mu$m). Chaque composé ayant été caractérisé a au préalable été séché sous vide dans un dessiccateur en présence d'anhydride phosphorique. Les rendements sont calculés à partir d'échantillons isolés avec une pureté supérieure ou égale à 97 %, jugée par RMN $^1$H et CPG.

Tous les réactifs, dont la synthèse n'est pas décrite ici, sont issus de sources commerciales (Aldrich, Acros, Avocado, Fluka, Lancaster, Strem).

**Exemples A - Synthèses des sels de phosphonium**

Les réactions sont effectuées sous atmosphère d'azote pur et sec. À une solution de 26,5 g (0,1 mole) de triphénylphosphine dans 200 mL de tétrahydrofurane (THF) anhydre, on ajoute 1,4 g (0,2 at.g (atome gramme)) de lithium. Après une nuit d'agitation à température ambiante, 9,25 g (11 mL, 0,1 mole) de chlorure de tertiobutyle dilué dans 50 mL de THF anhydre sont ajoutés. Le mélange réactionnel est porté au reflux pendant une heure. La solution limpide de couleur rouge sombre devient claire. On laisse revenir à température ambiante avant d'introduire 0,2 mole de composé halogéné, au préalable distillé et dilué dans 50 mL de THF anhydre.

Le mélange réactionnel est laissé sous agitation à une température $\theta$ pendant un temps T (voir Tableau 1 ci-dessous). Le sel de phosphonium est obtenu soit par simple filtration, soit par évaporation du solvant puis recristallisation jusqu'à point de fusion constant et enfin séché sous vide à 60 °C en présence de pentoxyde de phosphore ($P_2O_5$).

**- Tableau 1** : Synthèses des sels de phosphonium -

| Conditions de réaction et rendements | | | | |
|---|---|---|---|---|
| **Composé halogéné** | **$\theta$** | **T** | **Sel de phosphonium** | **Rdt (%)** |
| $CH_3I$ | 20°C | 24 h | **A1** | 96 |
| $CH_3CH_2I$ | 65°C | 11 h | **A2** | 90 |
| $CH_2$=CH-$CH_2I$ | 20°C | 2 jours | **A3** | 80 |

Les caractéristiques des sels de phosphonium préparés selon le mode opératoire général ci-dessus sont les suivantes :

**Exemple A1 : Iodure de diméthyldiphénylphosphonium**

- $C_{14}H_{16}PI$ (342,22), Point de fusion: 255,2°C (éthanol).
- RMN $^{31}P\{^1H\}$ ($CDCl_3$): $\delta$= 20,96 (s, 1P).
- RMN $^1$H ($CDCl_3$): $\delta$= 2,58 (d, 6H, 2$CH_3$, $^2J_{HP}$ = 14,0 Hz), 7,20-7,80 (m, 10H, 2Ph).
- IR (KBr) : v ($cm^{-1}$) = 3060 f, 2940 m, 2880 m, 1590 f, 1570 f, 1435 F, 1127-1117 d.F, 975 F, 940 F, 887 F, 790 m, 742 F, 690 F.

**Exemple A2 : Iodure de diéthyldiphénylphosphonium**

- $C_{16}H_{20}PI$ (370.24), Point de fusion: 208.5 °C (éthanol).
- RMN $^{31}P\{^1H\}$ ($CDCl_3$): $\delta$= 31,84 (s, 1P).
- RMN $^1$H ($CDCl_3$): $\delta$= 1,27 (td, 6H, 2$CH_3$, $^3J_{HH}$ = 7,6 Hz , $^3J_{HP}$ = 20,0 Hz), 3,30 (qd, 4H, 2$CH_2$, $^2J_{HP}$ = 13,2 Hz), 7,60-8,20 (m, 10H, 2Ph).
- IR (KBr) : v ($cm^{-1}$) = 3010 f, 2940 m, , 2990 m, 2905 m, 2880 m, 1590 f, 1585 f, 1480 m, 1430 F, 1115-1110 ép.F, 997 m, 775 F, 742 FF, 749 ép.F, 742 F, 690 F.

**Exemple A3 : Iodure de diallyldiphénylphosphonium**

- $C_{18}H_{20}PI$ (394.26), Point de fusion: 167.4°C ($CH_3Cl$/acétate d'éthyle).

- RMN $^{31}P\{^1H\}$ ($CDCl_3$): δ= 22,55 (s, 1P).
- RMN $^1H$ ($CDCl_3$): δ= 4,40 (dd, 4H, $2CH_2$, $^3J_{HH}$ = 5,0 Hz , $^2J_{HP}$ = 14,0 Hz), 5,50 (m, 6H, $2CH{=}CH_2$), 7,60-8,35 (m, 10H, 2Ph).
- IR (KBr): ν ($cm^{-1}$) = 3045 ff, 3000 m, 2895 F, 1633 m, 1585 m, 1439-1431 d.F, 1119 F, 1112 ép, 994-990 d.m, 750 F, 690 F.

**Exemples B - Synthèses des phosphines cyclovinyliques**

Les réactions sont effectuées sous atmosphère d'azote pur et sec. À une solution d'un iodure de phosphonium préparé aux Exemples A, dans 150 mL de tétrahydrofurane (THF) anhydre, 2 équivalents de n-butyllithium (n-BuLi ; 1,6 M) sont additionnés à -50°C, puis le mélange réactionnel est porté à -10°C pendant une heure (solution jaune).

À la même température, 1 équivalent de chlorodipénylphosphine sont ajoutés. Le mélange réactionnel est laissé sous agitation pour revenir à température ambiante pendant une heure (solution orange) puis on additionne un équivalent (ou plus si nécessaire) de dérivé cyclique carbonylé α,β-insaturé. Le mélange réactionnel est maintenu sous agitation, à température ambiante, pendant une nuit. On évapore alors le THF, puis on dissout le résidu dans le dichlorométhane.

La phase organique obtenue est ensuite lavée 3 fois à l'eau, séchée sur sulfate de magnésium ($MgSO_4$) anhydre et concentrée sous vide. Les produits sont séparés, avec des rendements satisfaisants, par chromatographie sur colonne de silice ou d'alumine avec un mélange d'éluants hexane/dichlorométhane approprié pour chaque produit.

**Exemple B1 : Pyridylvinyldiphénylphosphine (*Z*)-Py($C_2H_2$)$PPh_2$**

Le mode opératoire général a été suivi en utilisant 5 g (14,61 mmol) d'iodure de diméthyldiphénylphosphonium et 1,4 mL (14,61 mmol) de pyridincarboxaldéhyde (99%). Les deux isomères sont séparés sur colonne d'alumine avec un éluant hexane/dichlorométhane (2/1).

Le rendement de la réaction est 90 %.Les analyses du produit sont données ci-après.

Identification

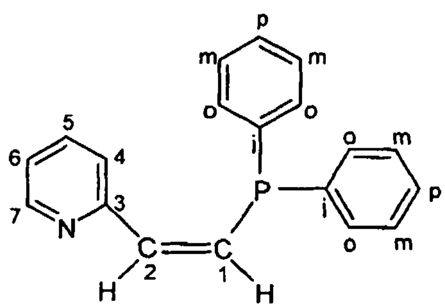

Formule brute : $C_{19}H_{16}NP$
Poids moléculaire : 289,16
Point de fusion : 106-108 °C (hexane/dichlorométhane).
BMN $^{31}P\{^1H\}$ ($COCl_3$): δ= -16,20 (s, 1P).
RMN $^1H$ ($CDCl_3$) : δ= 6.729 (dd, 1H, **$H_1$**, $J_{H1H2}$ = 12,4 Hz, $J_{H1P}$ = 0,6 Hz), 7,054 (ddd, 1H, **$H_6$**, $J_{H6H7}$ = 4,8 Hz), 7,330 (dd, 1H, **$H_2$**, $J_{H2P}$ = 18,7 Hz), 7,400 (m, 1H, **$H_4$**, $J_{H4H5}$ = 7,8 Hz, $J_{H4H6}$ = 1,2 Hz, $J_{H4H7}$ = 1,0 Hz), 7,30-7,49 (m, 10H, **2Ph**), 7,596 (td, 1H, **$H_5$**, $J_{H5H6}$ = 7,5 Hz, $J_{H5H7}$ = 1,8 Hz), 8,479 (d large, 1 H, **$H_7$**).
RMN $^{13}C\{^1H\}$ ($CDCl_3$) : δ= 121,79 (d, 1C, **$C_6$**, $J_{C6P}$= 1,5 Hz), 124,10 (d, 1C, **$C_4$**, $J_{C4P}$ = 1,6 Hz), 128,10 (s, 1C, **$C_p$**, $J_{CpP}$ = couplage non observé), 128,27 (d, 1 C, **$C_m$**, $J_{CmP}$ = 7,0), 132,77 (d, 1C, **$C_o$**, $J_{CoP}$ = 19,4 Hz), 135,25 (d, 1C, **$C_1$**, $J_{C1P}$ = 20,8 Hz), 135,84 (s, 1C, **$C_5$**, $J_{C5P}$ = couplage non observé), 139,81 (d, 1C, **$C_2$**, $J_{C2P}$ = 12,4 Hz), 140,50 (d, 1C, **$C_i$**, $J_{CiP}$ = 8,8 Hz), 148.60 ppm (s, 1C, $C_7$, $J_{C7P}$ = couplage non observé), 154,77 (d, 1 C, **$C_3$**, $J_{C3P}$ = 2,2 Hz). IR (KBr) : ν ($cm^{-1}$) = 3068 m, 3002 m, 1580 F, 1468 F, 1427 FF, 1302 F , 1088 m, 1066 m, 1026 m, 808 FF, 696 FF, 647 F.

**Exemple B2 : Pyridylvinyldiphénylphosphine (*E*)-Py($C_2H_2$)$PPh_2$**

Identification

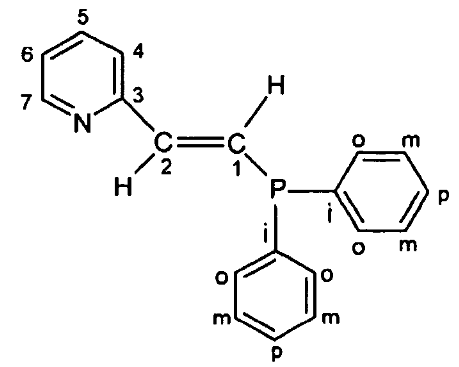

Formule brute : $C_{19}H_{16}NP$
Poids moléculaire : 289,16
RMN $^{31}P\{^1H\}$ ($CDCl_3$) : δ= -11.04 ($\Delta W_{1/2}$= 0,9Hz) (s, 1 P).
RMN $^1H$ ($CDCl_3$) : δ= 6,837 (dd, 1H, **$H_2$**, $J_{H2H1}$ = 16,8 Hz, $J_{H2P}$ = 11,2 Hz), 7,172 (ddd, 1H, **$H_6$**, $J_{H6H7}$ = 4,8 Hz), 7,248 (ddd, 1 H, **$H_4$**, $J_{H4H5}$ = 7,9 Hz, $J_{H4H6}$ = 1,2 Hz, $J_{H4H7}$ = 1,0 Hz), 7,373-7,518 (m, 10H, **2Ph**), 7,553 (dd, 1H, **$H_1$**, $J_{H1P}$ = 13,8 Hz), 7,656 (td, 1H, **$H_5$**, $J_{H5H6}$ = 7,5 Hz, $J_{H5H7}$ = 1,9 Hz), 8,601 (ddd, 1H, **$H_7$**).
RMN $^{13}C\{^1H\}$ ($CDCl_3$) : δ= 122,21 (s, 1C, **$C_4$**, $J_{C4P}$= couplage non observé), 122,67 (s, 1C, **$C_6$**. $J_{C6P}$ = couplage non observé), 128,62 (d, 1C, **$C_m$**, $J_{CmP}$ = 7,1), 128,91 (s, 1C, **$C_p$**, $J_{CpP}$ = couplage non observé), 132,30 (d, 1C, **$C_1$**, $J_{C1P}$ = 13,9 Hz), 133,50 (d, 1C, **$C_o$**, $J_{CoP}$ = 19,4 Hz), 136,63 (s, 1C, **$C_5$**, $J_{C5P}$ = couplage non observé), 137,15 (d, 1C, **$C_i$**, $J_{CiP}$ = 9,3 Hz), 141,32 (d, 1C, **$C_2$**, $J_{C2P}$ = 23,5 Hz), 149,71 (s, 1C, **$C_7$**, $J_{C7P}$ = couplage non observé), 154,86 (d, 1 C, $C_3$, $J_{C3P}$ = 11,4 Hz).
IR (KBr) : ν ($cm^{-1}$) = 3047 m, 3005 m, 1580 F, 1554 m, 1469 FF, 1428 FF, 1305 m, 1149 m, 1178 m, 1149 m, 1094 m, 1024 m, 975 F, 854 m, 763 FF, 749 FF, 742 FF, 694 FF.

**Exemple B3 : Phosphine myrténalique (*Z*)-$C_3H_6(C_6H_7)[C_2H_2]PPh_2$**

Le mode opératoire général a été suivi en utilisant 5 g de l'iodure de diméthyldiphénylphosphonium **A1** (14,61 mmol) et 2,4 mL (14,61 mmol) du myrténal. Les deux isomères sont séparés sur colonne d'alumine avec un mélange d'éluant hexane/dichlorométhane (95/5).

Le rendement de la réaction est de 53 % (*E*/*Z*= 70/30). Les analyses du produit sont données ci-après.

Identification

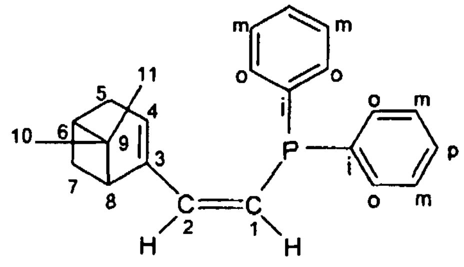

Formule brute : $C_{23}H_{25}P$
Poids moléculaire : 332,20
RMN $^{31}P\{^1H\}$ ($CDCl_3$) : δ= -23.20 (s, 1 P).
RMN $^1H$ ($CDCl_3$) : δ= 0,80 (s, 3H, **$CH_3$**), 1,28 (s, 3H, **$CH_3$**), 2,04 (m, 1H, **CH**), 2,44 (m, 4H, **2$CH_2$**), 3,04 (m, 1H, CH),

5,76 (m, 1H, **$H_4$**), 6,11 (dd, 1H, **$H_1$**, $J_{H1H2}$ = 12,64 Hz, $J_{H1P}$ = 0,77 Hz), 6,78 (dd, 1H, **$H_2$**, $J_{H2P}$ = 23,78 Hz), 7,33-7,49 (m, 10H, **2Ph**).
RMN $^{13}C\{^1H\}$ ($CDCl_3$) : δ= 20,21 (s, 2C, **$C_{10-11}$**), 40,40 (s, 1C, **$C_6$**), 45,18 (d, 1C, **$C_8$**, $J_{C8P}$ = 12,98 Hz), 31,54 (s, 1C, **$C_7$**), 32,274 (s, 1C, **$C_5$**), 38,03 (s, 1C, **$C_9$**), 125,60 (d, 1C, **$C_4$**, $J_{C4P}$ = 15,57 Hz), 128,29 (s, 2C, **$C_p$**, $J_{CpP}$ = couplage non observé), 128,33 (d, 4C, **$C_m$**, $J_{CmP}$ = 8,30 Hz), 132,77 (d, 4C, **$C_o$**, $J_{CoP}$ = 16,10 Hz), 134,22 (d, 1C, **$C_1$**, $J_{C1P}$ = 20,72 Hz), 140,42 (d, 2C, **$C_i$**, $J_{CiP}$ = 10,30 Hz), 144,44 (d, 1C, **$C_2$**, $J_{C2P}$ = 17,31 Hz), 146,70 (d, 1C, **$C_3$**, $J_{C3P}$ = 1,26 Hz).
IR (KBr) : ν ($cm^{-1}$) = 3060 m, 3040 m, 2980 F, 2940 F, 2910 FF, 2820 f , 1600 f, 1580 f, 1470 F, 1430 FF, 1380 m, 1360 m, 1260 f, 1180 f, 1120 f, 1090 m, 1020 F, 1000 m, 970 f, 910 F, 810 m, 730 FF, 695 FF.

**Exemple B4 : Phosphine myrténalique (*E*)-$C_3H_6(C_6H_7)[C_2H_2]PPh_2$**

Identification

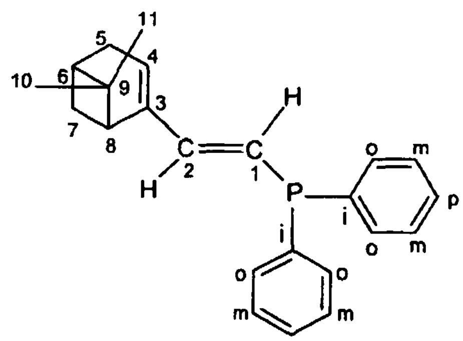

Formule brute : $C_{23}H_{25}P$
Poids moléculaire : 332,20
RMN $^{23}P\{^1H\}$ ($CDCl_3$) : δ= -12,62 (s, 1P).
RMN $^1H$ ($CDCl_3$) : δ= 0,79 (s, 3H, **$CH_3$**), 1,38 (s, 3H, **$CH_3$**), 2,18 (m, 1H, **CH**), 2,41 (m, 4H, **$2CH_2$**), 2,71 (t, 1H, **CH**), 5,70 (m, 1H, **$H_4$**), 6,25 (dd, 1H, **$H_1$**, $J_{H1H2}$ = 16,85 Hz, $J_{H1P}$ = 6,32 Hz), 6,70 (dd, 1H, **$H_2$**, $J_{H2P}$ = 15,03 Hz), 7,35-7,47 (m, 10H, **2Ph**).
RMN $^{13}C\{^1H\}$ ($CDCl_3$) : δ= 22,81 (s, 2C, **$C_{11}$**), 27,06 (s, 2C, **$C_{10}$**), 31,44 (s, 1C, **$C_7$**), 32,23 (s, 1C, **$C_5$**), 37,93 (s, 1C, **$C_9$**), 41,05 (s, 1C, **$C_6$**), 41,53 (s, 1C, **$C_8$**, $J_{C8P}$ = couplage non observé), 121,78 (d, 1C, **$C_1$**, $J_{C1P}$ = 9,00 Hz), 127,52 (s, 1C, **$C_4$**, $J_{C4P}$ = couplage non observé), 128,45 (s, 2C, **$C_p$**, $J_{CpP}$ = 1,73 Hz), 128,43 (d, 4C, **$C_m$**, $J_{CmP}$ = 8,44 Hz), 133,05 (d, 4C, **$C_o$**, $J_{CoP}$ = 13,92 Hz), 139,11 (d, 2C, **$C_i$**, $J_{CiP}$ = 9,76 Hz), 145,67 (d, 1C, **$C_2$**, $J_{C2P}$ = 32,55 Hz), 146,99 (d, 1C, **$C_3$**, $J_{C3P}$ = 14,09 Hz).
IR (KBr) : ν ($cm^{-1}$) = 3060 F, 3040 F, 2970 FF, 2940 FF, 2900 FF, 2860 F , 2820 F, 1620 F, 1580 m, 1520 f, 1470 F, 1430 FF, 1375 m, 1360 F, 1260 m, 1200 f, 1170 f, 1090 F, 1020 F, 970 FF, 810 m, 760 F, 730 FF, 690 FF.

**Exemple B5 : Phosphine perrilique (*Z*)-$C_3H_5(C_6H_7)[C_2H_2]PPh_2$**

Le mode opératoire général a été suivi en utilisant 5 g de l'iodure de diméthyldiphénylphosphonium **A1** (14,61 mmol) et 2,4 mL (14,61 mmol) du (S)-(-)-perillaldéhyde. Les deux isomères sont séparés sur colonne d'alumine avec un mélange d'éluant hexane/dichlorométhane (95/5).
Le rendement de la réaction est de 70 % (*E*/*Z*= 48/52). Les analyses du produit sont données ci-après.

Identification

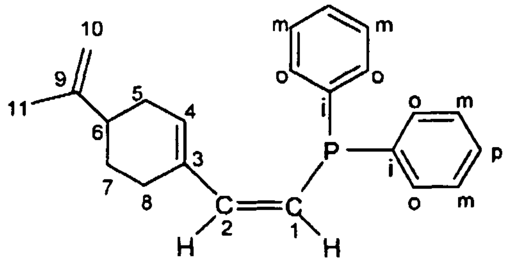

Formule brute : $C_{23}H_{25}P$
Poids moléculaire : 332,20
Point de fusion : 76 °C (hexane/dichlorométhane).
RMN $^{31}P\{^1H\}$ ($CDCl_3$) : δ= -25,10 (s, 1 P).
RMN $^1H$ ($CDCl_3$) : δ= 1,73 (s, 3H, **$CH_3$**), 1,85 (m, 1H, **CH**), 2,07 (d, 2H, **$CH_2$**), 2,31 (m, 2H, **$CH_2$**), 2,57 (m, 2H, **$CH_2$**), 4,72 (m, 2H, **$CH_2$**), 5,87 (m, 1H, **$H_4$**), 6,06 (dd, 1H, **$H_1$**, $J_{H1H2}$ = 12,75 Hz, $J_{H1P}$ = 2,77 Hz), 6,80 (q, 1H, **$H_2$**, $J_{H2P}$ = 25,01 Hz), 7,33-7,47 (m, 10H, **2Ph**).
RMN $^{13}C\{^1H\}$ ($CPCl_3$) : δ= 20,86 (s, 1C, **$C_{11}$**), 27,66 (d, 1C, **$C_7$**, $J_{C7P}$ = 2,214 Hz), 29,23 (d, 1C, **$C_8$**, $J_{C8P}$ = 14,96 Hz), 31,46 (s, 1C, **$C_5$**), 40,53 (s, 1C, **$C_6$**), 108,86 (s, 1C, **$C_{10}$**), 125,5 (d, 1C, **$C_1$**, $J_{C1P}$ = 16,05 Hz), 128,30 (d, 2C, **$C_p$**, $J_{CpP}$ = 1,71 Hz), 128,52 (d, 4C, **$C_m$**, $J_{CmP}$, = 5,88 Hz), 132,47 (d, 4C, **$C_o$**, $J_{CoP}$ = 5,83 Hz), 132,92 (d, 1C, **$C_4$**, $J_{C4P}$ = 3,92 Hz), 136,52 (d, 1C, **$C_3$**, $J_{C3P}$ = 0,85 Hz), 140,54 (d, 2C, **$C_i$**, $J_{CiP}$ = 13,08 Hz), 146,67 (d, 1C, **$C_2$**, $J_{C2P}$ = 18,87 Hz), 149,58 (s, 1C, **$C_9$**).
IR (KBr) : ν ($cm^{-1}$) = 3060 F, 3040 F, 2960 F, 1680 m, 1555 m, 1475 m, 1430 FF, 1370 f, 1090 f, 1020 m, 970 f, 890 FF, 730 FF, 690 FF.

**Exemple B6 : Phosphine perrilique (*E*)-$C_3H_5(C_6H_7)[C_2H_2]PPh_2$**

Identification

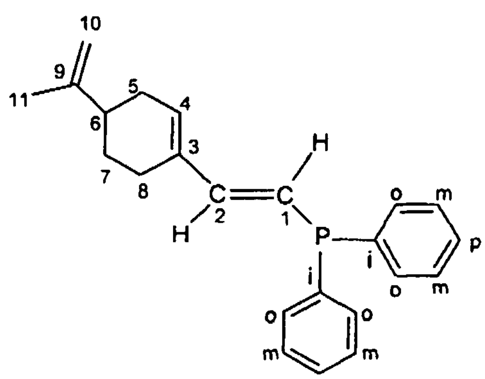

Formule brute : $C_{23}H_{25}P$
Poids moléculaire : 332,20
RMN $^{31}P\{^1H\}$ ($CDCl_3$) : δ = -12,96 (s, 1P).
RMN $^1H$ ($CDCl_3$) : δ = 1,78 (s, 3H, **$CH_3$**), 2,08 (m, 1H, **CH**), 2,38 (m, 6H, 3**$CH_2$**), 4,78 (m, 2H, **$CH_2$**), 5,88 (m, 1H, **$H_4$**), 6,25 (dd, 1H, **$H_1$**, $J_{H1P}$ = 6,16 Hz), 6,80 (t, 1H, **$H_2$**, $J_{H2H1}$ = 16,84 Hz), 7,26-7,47 (m, 10H, **2Ph**).
RMN $^{13}C\{^1H\}$ ($CDCl_3$) : δ = 21,61 (s, 1C, **$C_{11}$**), 24,93 (d, 1C, **$C_7$**, $J_{C7P}$ = 2,214 Hz), 26,38 (s, 1C, **$C_8$**, $J_{C8P}$ = couplage non observé), 31,44 (s, 1C, **$C_5$**), 41,07 (s, 1C, **$C_6$**), 108,93 (s, 1C, **$C_{10}$**), 122,25 (d, 1C, **$C_4$**, $J_{C4P}$ = 8,75 Hz), 128,43 (d, 4C, **$C_m$**, $J_{CmP}$ = 2,76 Hz), 132,66 (s, 2C, **$C_p$**, $J_{CpP}$ = couplage non observé), 132,91 (d, 4C, **$C_o$**, $J_{CoP}$ = 18,87 Hz), 135,79 (d, 1C, **$C_3$**, $J_{C3P}$ = 14,04 Hz), 138,99 (d, 2C, **$C_i$**, $J_{CiP}$= 9,51 Hz), 147,58 (d, 1C, **$C_1$**, $J_{C1P}$ = 32,35 Hz), 149,43 (s, 1C, **$C_9$**), 150,58 (s, 1C, **$C_2$**, $J_{C2P}$ = couplage non observé).
IR (KBr) : ν ($cm^{-1}$) = 3060 m 3040 m, 2920 F, 1680 FF, 1660 F, 1580 f, 1560 f, 1470 f, 1445 f, 1430 FF, 1370 m, 1255 f, 1160 f, 1090 f, 1025 f, 970 F, 730 F, 690 FF.

## Exemples C - Préparations des complexes

### Cuivre/Phosphines cyclovinyliques

Dans un tube de schlenk, ayant préalablement subi trois cycles d'évacuation sous vide d'une pompe-grillage-refroidissement-balayage d'azote, on introduit successivement une phosphine cyclovinylique et un sel de cuivre (à l'état solide). Le réacteur est purgé sous vide puis rempli de nouveau avec de l'azote. Le solvant (acétonitrile), puis le sel de cuivre (à l'état liquide) sont alors ajoutés à l'aide de seringues. Le réacteur est agité à température ambiante pendant une demi-heure.

### Exemple C1 : Complexe dimère 2(phosphine vinylpyridinique (*Z*)) / 2CuI

Le mode opératoire général a été suivi en utilisant 304 mg (1,047 mmol) de la phosphine pyridinique **B1**, 200 mg (1,047 mmol) de sel de cuivre CuI et 10 mL d'acétonitrile. Le précipité orange formé est filtré puis recristallisé dans l'acétonitrile.
Rendement : 480 mg (96 %).

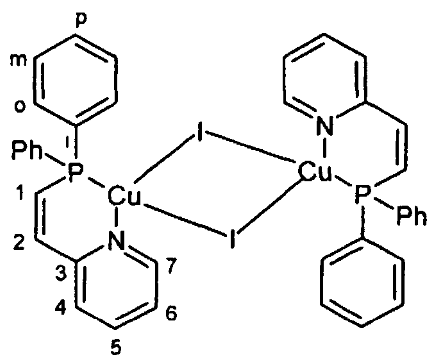

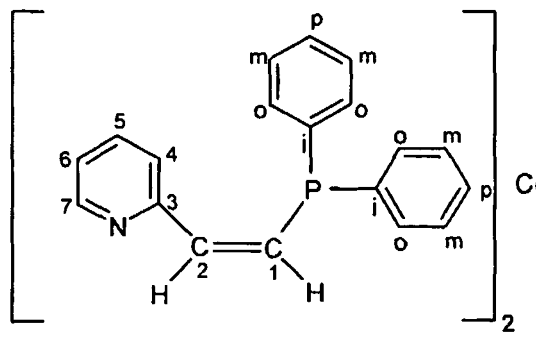

Complexe dimère pyridinique de cuivre

Formule brute : $C_{38}H_{32}Cu_2I_2N_2P_2$
Poids moléculaire : 958,82
Point de fusion : 181-183°C (acétonitrile).
RMN $^{31}P\{^1H\}$ ($CDCl_3$) : δ = -32.77 (s, 1P).
RMN $^1H$ ($CDCl_3$) : δ = 6,676 (dd, 1H, **$H_1$**, $J_{H1H2}$ = 13,0 Hz, $J_{H1P}$ = 2,5 Hz), 7,128 (ddd, 1H, **$H_6$**, $J_{H6H7}$ = 5,3 Hz, $J_{H6P}$ = 0,8 Hz), 7,181 (dd, 1H, **$H_2$**, $J_{H2P}$ = 30,8 Hz), 7,248 (m, 1H, **$H_4$**, $J_{H4H5}$ = 7,7 Hz, $J_{H4H6}$ = 1,4 Hz, $J_{H4H7}$ = 1,8 Hz), 7,32-7,61 (m, 20H, **2Ph**), 7,720 (td, 1H, **$H_5$**, $J_{H5H6}$ = 7,7 Hz, $J_{H5H7}$ = 1,8 Hz), 9,359 (d large, 1H, **$H_7$**, $J_{H7P}$ = 1,9 Hz).
RMN $^{13}C\{^1H\}$ ($CDCl_3$) : δ = 124,08 (d, 1C, **$C_6$**, $J_{C6P}$ = 2,7 Hz), 128,57 (d, 1C, **$C_m$**, $J_{CmP}$ = 9,3), 128,67(s, 1C, **$C_p$**, $J_{CpP}$ = couplage non observé), 129,39 (d, 1C, **$C_1$**, $J_{C1P}$ = 19,6 Hz), 129,55 (d, 1C, **$C_4$**, $J_{C4P}$ = 1,6 Hz), 133,11 (d, 1C, **$C_o$**, $J_{CoP}$ = 15,0 Hz), 134,42 (d, 1C, **$C_i$**, $J_{CiP}$ = 28,7 Hz), 137,63 (s, 1C, **$C_5$**, $J_{C5P}$ = couplage non observé), 141,79 (d, 1C, **$C_2$**, $J_{C2P}$ = 9,0 Hz), 152,28 (d, 1C, **$C_3$**, $J_{C3P}$ = 0,8 Hz), 154,05 ppm (d, 1C, **$C_7$**, $J_{C7P}$ = 1,8 Hz).
FAB-MS (mode positif) : m/z = 832 $[(Ph_2PCHCHC_5H_4N)_2Cu_2I]^+$, 543 $[(Ph_2PCHCHC_5H_4N)_1Cu_2I]^+$.
IR (KBr) : ν ($cm^{-1}$) = 3046 m, 1585 F, 1558 m, 1478 F, 1431 F, 1384 F, 1155 m, 1097 F, 1009 m, 998 f, 846 m, 805 FF, 749 F, 727 F, 695 FF, 649 m.

### Exemple C2 : Complexe dimère 2(phosphine vinylpyridinique (*Z*)/ 1CuI

Le mode opératoire général a été suivi en utilisant 100 mg (0.346 mmol) de la phosphine pyridinique B1, 33 mg (0.173 mmol) de sel de cuivre CuI et 5 ml d'acétonitrile. Après traitement, on obtient un précipité de couleur orange (complexe de cuivre 7).
Rendement : T.F= 100 %.
Formule brute : C38H32Cu2IN2P2
Poids moléculaire : 831.2.
Point de fusion : 95-97 °C (acétonitrile).
RMN 31P{1H} (CDCl3): δ= -24.34 (s, 1P) ppm.
RMN 1H (CDCl3): δ= 6.574 (dd, 1H, H1, JH1 H2= 13.0 Hz, JH1 P= 18.7 Hz), 7.128 (ddd, 1H, H6, JH6H7= 5.3 Hz, JH6P=

0.8 Hz), 7.630 (dd, 1H, H2, JH2P= 39.1 Hz), 7.248 (m, 1H, H4, JH4H5= 7.7 Hz, JH4H6= 1.4 Hz, JH4H7= 1.8 Hz), 7.32-7.61 (m, 20H, 2Ph), 7.720 (td, 1H, H5, JH5H6= 7.7 Hz, JH5H7= 1.8 Hz), 9.359 (d large, 1H, H7, JH7P= 1.9 Hz) ppm. RMN 13C{1H} (CDCl3): δ= 124.08 (d, 1C, C6, JC6P= 2.7 Hz), 128.29 (d, 1C, Cm, JCmP= 6.7), 128.13 (s, 1C, Cp, JCpP= a), 129.39 (d, 1C, C1, JC1P= 19.6 Hz), 129.55 (d, 1C, C4, JC4P= 1.6 Hz), 132.77 (d, 1C, Co, JCoP= 19.4 Hz), 135.39 (d, 1C, Ci, JCiP= 21.0 Hz), 137.63 (s, 1C, C5, JC5P= a), 141.79 (d, 1C, C2, JC2P= 9.0 Hz), 152.28 (d, 1C, C3, JC3P= 0.8 Hz), 154.05 ppm (d, 1C, C7, JC7P= 1.8 Hz).
FAB-MS (mode positif): m/z = 642 [(Ph2PCHCHC5H4N)2Cu]+, 352 [(Ph2PCHCHC5H4N)Cu]+. TOF-MS/ES+: m/z = 641.15 [(Ph2PCHCHC5H4N)2Cu]+, 352.02 [(Ph2PCHCHC5H4N)Cu]+.
IR (KBr): ν (cm-1) = 3045 m, 1582 F, 1556 m, 1478 F, 1432 FF, 1384 m , 1307 m, 1153 m, 1096 F, 1025 m, 997 m, 846 m, 803 FF, 744 F, 728 m, 695 FF, 651 m.

**Exemple C3 : Complexe phosphine vinylpyridinique (*E*) / CuI**

On opère comme dans le mode opératoire précédent en utilisant la phosphine pyridinique **B2**.
Rendement : 100 %.
Point de fusion : 109-110°C (acétonitrile).
RMN $^{31}P\{^1H\}$ ($CDCl_3$) : δ = -15,00 ($\Delta W_{1/2}$ = 187 Hz) (s, 1P).
RMN $^1H$ ($CDCl_3$) : δ = 7,138 (ddd, 1H, $\mathbf{H_6}$, $J_{H6H7}$ = 4,7 Hz), 7,146 (ddd, 1H, $\mathbf{H_4}$, $J_{H4H5}$ = 7,7 Hz, $J_{H4H6}$ = 1,2 Hz, $J_{H4H7}$ = 0,9 Hz), 7,176 (dd large, 1H, $\mathbf{H_2}$, $J_{H2H1}$ = 16,5 Hz, $J_{H2P}$ = 12,8 Hz), 7,204-7,597 (m, 10H, **2Ph**), 7,422 (dd large, 1H, $\mathbf{H_1}$, $J_{H1P}$ = 14,5 Hz), 7,537 (td, 1H, $\mathbf{H_5}$, $J_{H5H6}$ = 7,7 Hz, $J_{H5H7}$ = 1,8 Hz), 8,520 (ddd, 1H, $\mathbf{H_7}$).
RMN $^{13}C\{^1H\}$ ($CDCl_3$) : δ = 123,01 (s, 1C, $\mathbf{C_4}$, $J_{C4P}$ = couplage non observé), 123,27 (s, 1C, $\mathbf{C_6}$, $J_{C6P}$ = couplage non observé), 126,96 (d, 1C, $\mathbf{C_1}$, $J_{C1P}$ = 26,0 Hz), 128,51 (d, 1C, $\mathbf{C_m}$, $J_{CmP}$ = 8,7), 129,64 (s, 1C, $\mathbf{C_p}$, $J_{CpP}$ = couplage non observé), 133,00 (d, 1C, $\mathbf{C_i}$, $J_{CiP}$ = 30,2 Hz), 133,75 (d, 1C, $\mathbf{C_o}$, $J_{CoP}$ = 13,5 Hz), 136,48 (s, 1C, $\mathbf{C_5}$, $J_{C5P}$ = couplage non observé), 144,22 (d, 1C, $\mathbf{C_2}$, $J_{C2P}$ = 14,1 Hz), 149,52 ppm (s, 1C, $\mathbf{C_7}$, $J_{C7P}$ = couplage non observé), 154,25 (d, 1C, $\mathbf{C_3}$, $J_{C3P}$ = 15,0 Hz).
IR (KBr) : ν ($cm^{-1}$) = 3047 m, 2964 m, 1579 F, 1558 m, 1466 F, 1432 FF, 1384 F, 1308 f, 1261 F, 1178 f, 1148 m, 1093 F, 1025 m, 975 m, 856 m, 802 F, 741 FF, 693 FF, 630 f.

**Exemple C4 : Complexe phosphine vinylpyridinique (*E*) / CuI**

Le mode opératoire général a été suivi en utilisant 100 mg (0.346 mmol) de la phosphine pyridinique B2, 66 mg (0.346 mmol) de sel de cuivre CuI et 5 ml d'acétonitrile. Après traitement, on obtient un précipité de couleur jaune (complexe de cuivre 9). Rendement : T.F= 100 %.
Point de fusion : 195-197 °C (acétonitrile).
RMN 31P{1H} (CDCl3): δ= -22.97 (ΔW1/2= 1550Hz) (s, 1 P) ppm. RMN 1H (CDCl3): δ= 7.141 (ddd, 1H, H6, JH6H7= 4.9 Hz), 7.180 (ddd, 1H, H4, JH4H5= 7.8 Hz, JH4H6= 1.2 Hz, JH4H7= 0.8 Hz), 7.410 (d large, 1H, H2, JH2H1= 16.7 Hz, JH2P= a), 7.266-7.692 (m, 10H, 2Ph), 7.488 (dd large, 1H, H1, JH1P= 11.8 Hz), 7.515 (td, 1H, H5, JH5H6= 7.5 Hz, JH5H7= 1.8 Hz), 8.583 (ddd, 1H, H7) ppm. RMN 13C{1H} (CDCl3) : δ= 123.14 (s, 1C, C4, JC4P= a), 123.37 (s, 1C, C6, JC6P= a), 127.05 (d, 1C, C1, JC1P= 29.1 Hz), 128.51 (d, 1C, Cm, JCmP= 9.4), 129.64 (s, 1C, Cp, JCpP= a), 132.96 (d, 1C, Ci, JCiP= 32.0 Hz), 133.82 (d, 1C, Co, JCoP= 13.5 Hz), 136.72 (s, 1C, C5, JC5P= a), 144.94 (d, 1C, C2, JC2P= 15.1 Hz), 149.75 ppm (s, 1C, C7, JC7P= a), 154.37 (d, 1C, C3, JC3P= 16.2 Hz).
IR (KBr): ν (cm-1) = 3049 m, 3000 m, 1579 F, 1560 m, 1480 m, 1466 m, 1432 F, 1384 m, 1308 f, 1261 m, 1178 f, 1150 f, 1096 F, 1025 m, 970 m, 857 m, 804 F, 763 F, 739 FF, 692 FF, 631 f.

**Exemples D - Réactions d'arylation - Procédure générale**

Dans un tube de schlenk de 35 mL, ayant préalablement subi trois cycles d'évacuation sous vide d'une pompe-grillage-refroidissement-balayage d'azote, on introduit successivement un sel de cuivre, une phosphine cyclovinylique (ligand), un nucléophile et éventuellement une base.
L'agent d'arylation puis le solvant (acétonitrile) sont alors ajoutés à l'aide de seringues. Le réacteur est porté à la température souhaitée et agité à cette température pendant la durée indiquée dans chacun des exemples qui suivent.

**Exemple D1 : Arylation du pyrazole**

*À partir d'iodobenzène*

Le mode opératoire général (acétonitrile, 82 °C, 3 heures) a été suivi en utilisant 9,52 mg (0,05 mmol) d'iodure de cuivre CuI, 28,9 mg (0,1 mmol) de la phosphine vinylpyridinique **B1**, 68 mg (0,75 mmol) de pyrazole, 326 mg (1

mmol) de carbonate de césium $Cs_2CO_3$, 56 μL (0,5 mmol) d'iodobenzène et 500 μL d'acétonitrile.

L'huile obtenue après traitement a été purifiée par chromatographie sur colonne de silice (éluant : dichlorométhane/hexane 50/50).

Rendement : 70 mg d'huile incolore (98 %).

*À partir de bromobenzène*

Le mode opératoire général (acétonitrile, 82 °C, 4 heures) a été suivi en utilisant 9,52 mg (0,05 mmol) d'iodure de cuivre CuI, 28,9 mg (0,1 mmol) de la phosphine vinylpyridinique **B1**, 68 mg (0,75 mmol) de pyrazole, 326 mg (1 mmol) de carbonate de césium $Cs_2CO_3$, 53 μL (0,5 mmol) du bromobenzène et 500 μL d'acétonitrile.

L'huile obtenue après traitement a été purifiée par chromatographie sur colonne de silice (éluant : dichlorométhane/hexane 50/50).

Rendement : 71 mg d'huile incolore (99 %).

Identification

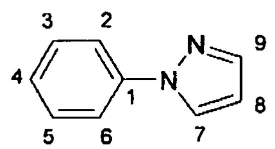

**1-Phenyl-1-H-pyrazole**

RMN $^1H$ ($CDCl_3$) : δ 7,95-7,96 (dd, 1H, $H_7$) ; 7,71-7,75 (m, 3H, $H_{2,6,9}$) ; 7,47-7,50 (m, 2H, $H_{3,5}$) ; 7,28-7,34 (m, 1 H, $H_4$) ; 6,49-6,50 (dd, 1 H, $H_8$).

RMN $^{13}C$ ($CDCl_3$) : δ 141,09 ($C_9$) ; 140,22 ($C_1$) ; 129,45 ($C_{3,5}$) ; 126,75 ($C_7$) ; 126,46 ($C_4$) ; 119,23($C_{2,6}$) ; 107,61 ($C_8$).

IR (KBr) : ν ($cm^{-1}$) = 3142 ; 3050 ; 2924 ; 1600 ; 1520 ; 1500 ; 1393 ; 1332 ;, 1198 ; 1120 ; 1046 ; 936 ; 914 ; 755 ; 689 ; 654 ; 610 ; 515.

GC/MS : rt = 14,53 min, M/Z = 144.

HRMS : 145,0766 (M+H). Théorique: 145,0766.

**Exemple D2 : Arylation du 3,5-diméthylphénol**

*À partir d'iodobenzène*

Le mode opératoire général (acétonitrile, 82 °C, 3 heures) a été suivi en utilisant 9,52 mg (0,05 mmol) d'iodure de cuivre CuI, 28,9 mg (0,1 mmol) de la phosphine vinylpyridinique **B1**, 91,62 mg (0,75 mmol) de 3,5-diméthylphénol, 212 mg (1 mmol) de phosphonate de potassium $K_3PO_4$, 56 μL (0,5 mmol) d'iodobenzène et 500 μL d'acétonitrile.

L'huile obtenue après traitement a été purifiée par chromatographie sur colonne de silice (éluant : hexane).

Rendement : 95 mg d'huile incolore (96 %).

*À partir de bromobenzène*

Le mode opératoire général (acétonitrile, 82 °C, 4 heures) a été suivi en utilisant 9,52 mg (0,05 mmol) d'iodure de cuivre CuI, 28,9 mg (0,1 mmol) de la phosphine vinylpyridinique **B1,** 91,62 mg (0,75 mmol) de 3,5-diméthylphénol, 212 mg (1 mmol) de phosphonate de potassium $K_3PO_4$, 53 μL (0,5 mmol) du bromobenzène et 500 μL d'acétonitrile.

L'huile obtenue après traitement a été purifiée par chromatographie sur colonne de silice (éluant : hexane).

Rendement : 97 mg d'huile incolore (98 %).

Identification

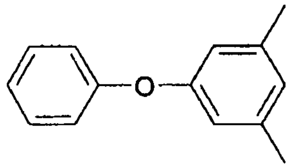

**3,5-diméthyldiphényléther**

RMN $^{1}H$ ($CDCl_3$) : δ = 7,28-7,42 (m, 2H) ; 7,12-7,17 (m, 1 H) ; 7,03-7,14 (m, 2H) ; 6,79 (m, 1 H) ; 6,69 (m, 2H) ; 2,33 (s, 6H, $CH_3$).
RMN $^{13}C$ {$^{1}H$} ($CDCl_3$) : δ= 157,50 (Cq) ; 157,22 (Cq) ; 139,61 (2 Cq) ; 129,70 (2 CH) ; 125,04 (CH) ; 123,02 (CH) ; 118,89 (2 CH) ; 116,67 (2 CH) ; 21,35 (2 $CH_3$).
GC/MS : rt = 18,24 min, M/Z = 198.
Rf : 0,22 (éluant : hexane).

**Revendications**

1. Utilisation, en tant que ligand d'un complexe comprenant du cuivre, d'une phosphine cyclovinylique de formule (1) :

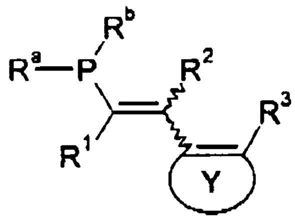

**(1)**

formule dans laquelle :

• $R^a$ et $R^b$, identiques ou différents, de préférence identiques, représentent chacun un radical indépendamment choisi parmi alkyle, aryle, hétéroaryle, monoalkylamino, dialkylamino, alkoxy, aryloxy, hétéroaryloxy ;
• $R^1$ représente hydrogène ou alkyle;
• $R^2$ et $R^3$, identiques ou différents, sont choisis indépendamment parmi l'hydrogène, un radical hydrocarboné, un radical aryle et un radical hétéroaryle ; et
• le cycle Y représente un noyau mono-, bi- ou tri-cyclique, comportant :

- un total de 5 à 20 chaînons ;
- éventuellement un ou plusieurs hétéroatomes choisis parmi azote, oxygène, soufre et phosphore ; et
- éventuellement une ou plusieurs autres doubles liaisons intracycliques ; ledit cycle Y étant éventuellement substitué par une ou plusieurs espèces chimiques choisies parmi alkyl-G-, alcényl-G-, alcynyl-G-, aryl-G-, hétéroaryl-G- (où G représente une liaison, l'atome d'oxygène ou l'atome de soufre), halogène, $-NO_2$, $-NH_2$, -CN et $PR^aR^b$, où $R^a$ et $R^b$ sont tels que définis ci-dessus.

2. Utilisation selon la revendication 1, dans laquelle le cycle Y présent dans la phosphine de formule (1) est un noyau aromatique ou non aromatique, mono-, bi- ou tri-cyclique, éventuellement porteur de un ou plusieurs hétéroatomes choisis parmi azote, oxygène, soufre et phosphore.

3. Utilisation selon la revendication 1 ou la revendication 2, dans laquelle le cycle Y présent dans la phosphine de formule (1) est choisi parmi le cyclopentène, le cyclopentadiène, les pyrroles, les imidazoles, les pyrrolines, les imidazolines, les pyrazolines, le furane, le dihydrofurane, le thiophène, le dihydrothiophène, les isoxazoles, thiazoles et isothiazoles ainsi que leurs analogues dihydrogénés, le benzène, les cyclohexadiènes, le cyclohexène, la pyridine et ses analogues di- et tétra-hydrogénés, les pyrazines, pyrimidines et pyridazines et leurs analogues di- et tétra-hydrogénés, les pyranes et dihydropyranes, la triazine et ses analogues di- et tétra-hydrogénés, la dithiazine, le cycloheptène, les cycloheptadiènes, les azépines et leurs analogues partiellement hydrogénés, le cyclooctène, les cyclooctadiènes, le cyclooctatriène, les azocines, le pentalène, l'indane, les indènes, les bornènes, les norbornènes,

le naphtalène, l'azulène, l'heptalène, le cyclopentacyclooctène, les benzocycloheptènes, le benzocyctooctène, l'indolizine, l'indole, l'isoindole, les quinazolines, la quinoline, l'isoquinoline, la phtalazine, la naphtyridine, la quinoxaline, la cinnoline, les chromanes, isochromanes chromènes et isochromènes, les indolines et isoindolines, , les indacènes, les acénaphtylènes, le fluorène, le phénalène, le phénanthrène, l'anthracène, le thianthrène, le xanthène, la phénoxathiine, les carbazoles, la carboline, la phénanthridine, l'acridine, la périmidine, la phénanthroline, la phénazine, la phénothiazine, la phénoxazine, ainsi que leurs analogues partiellement hydrogénés,

**4.** Utilisation selon l'une quelconque des revendications précédentes, dans laquelle le composé de formule (1) possède les caractéristiques suivantes, prises isolément ou en combinaison de deux ou plusieurs d'entre elles :

- $R^a$ et $R^b$, identiques ou différents, représentent chacun un radical indépendamment choisi parmi alkyle, notamment méthyle, éthyle propyle, butyle ; aryle, notamment phényle ou naphtyle, hétéroaryle, notamment pyridyle ou quinolyle, et de préférence $R^a$ et $R^b$ sont identiques et représentent chacun phényle ;
- $R^2$ et $R^3$, identiques ou différents, sont choisis indépendamment parmi l'hydrogène, un radical alkyle, un radical aryle et un radical hétéroaryle, en particulier parmi l'hydrogène et un radical alkyle, notamment méthyle, éthyle ou propyle ; et
- Y représente un noyau mono-, bi- ou tri-cyclique, de préférence mono-cyclique comportant 5 ou 6 chaînons et éventuellement 1, 2 ou 3 hétéroatomes choisis parmi azote, oxygène et soufre, Y étant de préférence un noyau aromatique, éventuellement substitué par une ou plusieurs espèces chimiques choisies parmi alkyl-G-, alcényl-G-, alcynyl-G-, aryl-G-, hétéroaryl-G- (où G représente une liaison, l'atome d'oxygène ou l'atome de soufre), halogène, $-NO_2$, $-NH_2$, -CN et $PR^aR^b$, où $R^a$ et $R^b$ sont tels que définis précédemment.

**5.** Utilisation selon l'une quelconque des revendications précédentes, dans laquelle le composé de formule (1) possède les caractéristiques suivantes :

- $R^a$ et $R^b$, identiques ou différents, représentent chacun un radical indépendamment choisi parmi aryle, notamment phényle ou naphtyle, et hétéroaryle, notamment pyridyle ou quinolyle, et de préférence $R^a$ et $R^b$ sont identiques et représentent chacun phényle ;
- $R^1$, $R^2$ et $R^3$, identiques ou différents, sont choisis indépendamment parmi l'hydrogène et un radical alkyle, notamment méthyle, éthyle ou propyle ; et
- Y représente un noyau monocyclique, de préférence mono-cyclique comportant 6 chaînons et éventuellement 1, 2 ou 3 hétéroatomes, de préférence 1 hétéroatome, choisis parmi azote, oxygène et soufre, de préférence azote, Y étant de préférence un noyau aromatique, éventuellement substitué par une ou plusieurs espèces chimiques choisies parmi alkyl-G-, alcényl-G-, alcynyl-G-, aryl-G-, hétéroaryl-G- (où G représente une liaison, l'atome d'oxygène ou l'atome de soufre), halogène, $-NO_2$, $-NH_2$, -CN et $PR^aR^b$, où $R^a$ et $R^b$ sont tels que définis précédemment.

**6.** Composé qui est un complexe du cuivre avec au moins une phosphine cyclovinylique de formule (1), telle que définie dans l'une quelconque des revendications 1 à 5.

**7.** Composé selon la revendication 6 qui est le complexe dimère pyridylvinyldiphénylphosphine/iodure de cuivre $[C_5M_4N\text{-}CH{=}CH\text{-}PPh_2]_2Cu_2I_2$, où Ph représente le radical phényle

**8.** Composé selon la revendication 6, qui est le complexe monomère pyridylvinyldiphénylphosphine/iodure de cuivre $[Py\text{-}CH{=}CH\text{-}PPh_2]_2CuI$, où Ph représente le radical phényle et Py représente pyridyle, sous forme d'isomère Z ou E, purs ou en mélange desdits deux isomères en toutes proportions.

**9.** Procédé de création de liaison carbone-carbone (C-C) ou de liaison carbone-hétéroatome (C-HE) en faisant réagir un composé porteur d'un groupement partant avec un composé nucléophile porteur d'un atome de carbone ou d'un hétéroatome (HE) susceptible de se substituer au groupement partant, créant ainsi une liaison C-C ou C-HE, procédé dans lequel la réaction est réalisée en présence d'une quantité efficace d'un système catalytique comprenant au moins un complexe cuivre avec au moins une phosphine cyclovinylique de formule (1) :

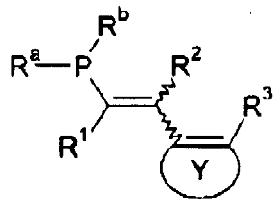

(1)

formule dans laquelle :

- $R^a$ et $R^b$, identiques ou différents, de préférence identiques, représentent chacun un radical indépendamment choisi parmi alkyle, aryle, hétéroaryle, monoalkylamino, dialkylamino, alkoxy, aryloxy, hétéroaryloxy;
- $R^1$ choisi parmi l'hydrogène, un radical hydrocarboné et un radical hétéroaryl;
- $R^2$ et $R^3$, identiques ou différents, sont choisis indépendamment parmi l'hydrogène, un radical hydrocarboné, un radical aryle et un radical hétéroaryle ; et
- le cycle Y représente un noyau mono-, bi- ou tri-cyclique, comportant :

  - un total de 5 à 20 chaînons ;
  - éventuellement un ou plusieurs hétéroatomes choisis parmi azote, oxygène, soufre et phosphore ; et
  - éventuellement une ou plusieurs autres doubles liaisons intracycliques ; ledit cycle Y étant éventuellement substitué par une ou plusieurs espèces chimiques choisies parmi alkyl-G-, alcényl-G-, alcynyl-G-, aryl-G-, hétéroaryl-G- (où G représente une liaison, l'atome d'oxygène ou l'atome de soufre), halogène, $-NO_2$, $-NH_2$, -CN et $PR^aR^b$, où $R^a$ et $R^b$ sont tels que définis ci-dessus.

**10.** Procédé selon la revendication 9, dans lequel le complexe du cuivre avec au moins une phosphine cyclovinylique est un complexe selon l'une quelconque des revendications 6 à 8.

**11.** Procédé selon la revendication 10, dans lequel le composé porteur d'un groupe partant est un composé comportant une double liaison ou une triple liaison en position a dudit groupe partant ou un composé aromatique.

**12.** Procédé selon l'une quelconque des revendications 10 ou 11, dans lequel le composé nucléophile est un composé organique hydrocarboné, acyclique, cyclique ou polycyclique, comprenant au moins un atome porteur d'un doublet libre, qui peut comprendre ou non une charge, et de préférence, un atome d'azote, d'oxygène, de soufre, de bore ou de phosphore, ou comprend un atome de carbone qui peut donner sa paire d'électrons.

**13.** Procédé selon l'une quelconque des revendications 10 à 12, dans lequel le nombre de moles du composé porteur du groupe partant et le nombre de moles du composé nucléophile varie le plus souvent entre 0,1 et 2,0, de préférence entre 0,5 et 1,5, de préférence encore entre 0,8 et 1,2, et plus préférentiellement entre 0,9 et 1,1.

**14.** Procédé selon l'une quelconque des revendications 10 à 13, dans lequel la quantité totale de catalyseur complexe cuivre/phosphine cyclovinylique, exprimée par le rapport molaire entre le nombre de moles de complexe exprimé en cuivre, et le nombre de moles de composé porteur d'un groupe partant, varie généralement entre 0,001 et 0,5, de préférence entre 0,01 et 0,1.

**15.** Procédé selon l'une quelconque des revendications 10 à 14, dans lequel intervient une base dont le pKa est compris entre 4 et 30.

**16.** Procédé selon l'une quelconque des revendications 10 à 15, dans lequel intervient une base choisie parmi les carbonates, hydrogénocarbonates, phosphates ou hydroxydes de métaux alcalins, ou de métaux alcalino-terreux, les hydrures de métaux alcalins, les alcoolates de métaux alcalins et les amines tertiaires.

**17.** Procédé selon l'une quelconque des revendications 10 à 16, qui est réalisé en présence d'un solvant organique polaire choisi parmi : les carboxamides linéaires ou cycliques dont le N,N-diméthylacétamide (DMAC), le N,N-diéthylacétamide, le diméthylformamide (DMF), le diéthylformamide ou la 1-méthyl-2-pyrrolidinone(NMP) ;le diméthylsulfoxyde (DMSO) ;l'hexaméthylphosphotriamide (HMPT) ;la tétraméthylurée ; les composés nitrés dont le nitrométhane, le nitroéthane, le 1-nitropropane, le 2-nitropropane ou leurs mélanges, le nitrobenzène ;les nitriles aliphatiques ou aromatiques dont l'acétonitrile, le propionitrile, le butanenitrile, l'isobutanenitrile, le pentanenitrile,

le 2-méthylglutaronitrile, l'adiponitrile ; la tétraméthylène sulfone (sulfolane) ; les carbonates organiques dont le diméthylcarbonate, le di-isopropylcarbonate, le di-n-butylcarbonate ; les esters d'alkyle dont l'acétate d'éthyle ou d'isopropyle ; les hydrocarbures aromatiques halogénés ou non, dont le chlorobenzène ou le toluéne ; les cétones dont l'acétone, la méthyléthylcétone, la méthylisobutylcétone, la cyclopentanone, la cyclohexanone ; les hétérocycles azotés dont la pyridine, la picoline et les quinoléines ou un mélange de deux ou plusieurs de ces solvants.

**18.** Procédé selon l'une quelconque des revendications 10 à 17, dans lequel le composé nucléophile et/ou le composé porteur du groupe partant est(sont) utilisé(s) comme solvant(s) de la réaction.

**19.** Procédé selon l'une quelconque des revendications 10 à 18, dans lequel le complexe cuivre/phosphine cyclovinylique est préparé *in situ.*

**Claims**

**1.** The use, as a ligand of a complex comprising copper, of a cyclovinyl phosphine of formula (I):

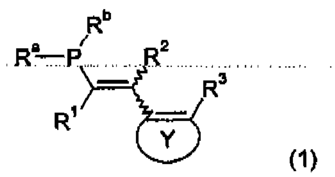

(1)

in which formula:

- $R^a$ and $R^b$, which are identical or different, preferably identical, each represent a radical independently selected from alkyl, aryl, heteroaryl, monoalkylamino, dialkylamino, alkoxy, aryloxy, heteroaryloxy;
- $R^1$ is selected from hydrogen or alkyl;
- $R^2$ and $R^3$, which are identical or different, are selected independently from hydrogen, a hydrocarbon radical, an aryl radical, and a heteroaryl radical; and
- the ring Y represents a mono-, bi- or tri-cyclic nucleus comprising:

  - a total of 5 to 20 members;
  - optionally one or more heteroatoms selected from nitrogen, oxygen, sulfur, and phosphorus; and
  - optionally one or more other intracyclic double bonds;

said ring Y is optionally substituted by one or more chemical species selected from alkyl-G-, alkenyl-G-, alkynyl-G-, aryl-G-, heteroaryl-G-(where G represents a bond, the oxygen atom or the sulfur atom), halogen, $-NO_2$, $-NH_2$, -CN, and $PR^aR^b$, where $R^a$ and $R^b$ are as defined above.

**2.** The use as claimed in claim 1, wherein the ring Y present in the phosphine of formula (1) is a mono-, bi- or tri-cyclic, aromatic or nonaromatic nucleus which optionally carries one or more heteroatoms selected from nitrogen, oxygen, sulfur, and phosphorus.

**3.** The use as claimed in claim 1 or claim 2, wherein the ring Y present in the phosphine of formula (1) is selected from cyclopentene, cyclopentadiene, pyrroles, imidazoles, pyrrolines, imidazolines, pyrazolines, furan, dihydrofuran, thiophene, dihydrothiophene, isoxazoles, thiazoles, and isothiazoles, and also their dihydrogenated analogs, benzene, cyclohexadienes, cyclohexene, pyridine and its di- and tetra-hydrogenated analogs, pyrazines, pyrimidines, and pyridazines and their di- and tetra-hydrogenated analogs, pyrans and dihydropyrans, triazine and its di- and tetrahydrogenated analogs, dithiazine, cycloheptene, cycloheptadienes, azepines and their partially hydrogenated analogs, cyclooctene, cyclooctadienes, cyclooctatriene, azocines, pentalene, indane, indenes, bornenes, norbornenes, naphthalene, azulene, heptalene, cyclopentacyclo-octene, benzocycloheptenes, benzocyclooctene, indolizine, indole, isoindole, quinazolines, quinoline, isoquinoline, phthalazine, naphthyridine, quinoxaline, cinnoline, chromans, isochromans, chromenes and isochromenes, indolines and isoindolines, indacenes, acenaphthylenes, fluorene, phenalene, phenanthrene, anthracene, thianthrene, xanthene, phenoxathiine, carbazoles, carboline, phenanthridine, acridine, perimidine, phenanthroline, phenazine, phenothiazine, phenoxazine, and their partially hydrogenated analogs.

**4.** The use as claimed in any of the preceding claims, wherein the compound of formula (1) possesses the following characteristics, taken in isolation or in combination of two or more thereof:

- $R^a$ and $R^e$, which are identical or different, each represent a radical independently selected from alkyl, especially methyl, ethyl, propyl or butyl; aryl, especially phenyl or naphthyl, heteroaryl, especially pyridyl or quinolyl, and preferably $R^a$ and $R^b$ are identical and each represent phenyl;
- $R^2$ and $R^3$, which are identical or different, are selected independently from hydrogen, an alkyl radical, an aryl radical, and a heteroaryl radical, more particularly from hydrogen and an alkyl radical, especially methyl, ethyl or propyl; and
- Y represents a mono-, bi- or tri-cyclic nucleus, preferably a monocyclic nucleus comprising 5 or 6 members and optionally 1, 2 or 3 heteroatoms selected from nitrogen, oxygen, and sulfur, Y being preferably an aromatic nucleus which is optionally substituted by one or more chemical species selected from alkyl-G-, alkenyl-G-, alkynyl-G-, aryl-G-, heteroaryl-G- (where G represents a bond, the oxygen atom or the sulfur atom), halogen, $-NO_2$, $-NH_2$, -CN, and $PR^aR^b$, where $R^a$ and $R^b$ are as defined above.

**5.** The use as claimed in any of the preceding claims, wherein the compound of formula (1) possesses the following characteristics:

- $R^a$ and $R^b$, which are identical or different, each represent a radical independently selected from aryl, especially phenyl or naphthyl, and heteroaryl, especially pyridyl or quinolyl, and preferably $R^a$ and $R^b$ are identical and each represent phenyl;
- $R^1$, $R^2$, and $R^3$, which are identical or different, are selected independently from hydrogen and an alkyl radical, especially methyl, ethyl or propyl; and
- Y represents a monocyclic nucleus, preferably a monocyclic nucleus comprising 6 members and optionally 1, 2 or 3 heteroatoms, preferably 1 heteroatom, selected from nitrogen, oxygen, and sulfur, preferably nitrogen, Y being preferably an aromatic nucleus which is optionally substituted by one or more chemical species selected from alkyl-G-, alkenyl-G-, alkynyl-G-, aryl-G-, heteroaryl-G- (where G represents a bond, the oxygen atom or the sulfur atom), halogen, $-NO_2$, $-NH_2$, -CN, and $PR^aR^b$, where $R^a$ and $R^b$ are as defined above.

**6.** A compound which is a complex of copper with at least one cyclovinyl phosphine of formula (1) as defined in any of claims 1 to 5.

**7.** The compound as claimed in claim 6, being the dimeric pyridylvinyldiphenylphosphine/copper iodide complex $[C_5H_4N\text{-}CH{=}CH\text{-}PPh_2]_2Cu_2I_2$, where Ph represents the phenyl radical.

**8.** The compound as claimed in claim 6, being the monomeric pyridylvinyldiphenylphosphine/copper iodide complex $[Py\text{-}CH{=}CH{=}PPh_2]_2CuI$, where Ph represents the phenyl radical and Py represents pyridyl, in the form of the Z or E isomer, pure or as a mixture of said two isomers in any proportions.

**9.** A method of creating a carbon-carbon (C-C) bond or carbon-heteroatom (C-HE) bond by reacting a compound which carries a leaving group with a nucleophilic compound which carries a carbon atom or a heteroatom (HE) which can be capable of replacing the leaving group, thereby creating a C-C or C-HE bond, in which method the reaction is carried out in the presence of an effective amount of a catalyst system comprising at least one cyclovinyl phosphine/copper complex of formula (1) :

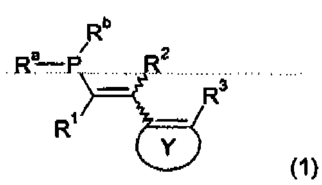

(1)

formula in which:

- $R^a$ and $R^b$, which are identical or different, preferably identical, each represent a radical independently selected from alkyl, aryl, heteroaryl, monoalkylamino, dialkylamino, alkoxy, aryloxy, heteroaryloxy;
- $R^1$ is selected from hydrogen, a hydrocarbon radical and a heteroaryl radical;
- $R^2$ and $R^3$, which are identical or different, are selected independently from hydrogen, a hydrocarbon radical,

an aryl radical, and a heteroaryl radical; and
• the ring Y represents a mono-, bi- or tri-cyclic nucleus comprising:

- a total of 5 to 20 members;
- optionally one or more heteroatoms selected from nitrogen, oxygen, sulfur, and phosphorus; and
- optionally one or more other intracyclic double bonds;

said ring Y is optionally substituted by one or more chemical species selected from alkyl-G-, alkenyl-G-, alkynyl-G-, aryl-G-, heteroaryl-G-(where G represents a bond, the oxygen atom or the sulfur atom), halogen, $-NO_2$, $-NH_2$, -CN, and $PR^aR^b$, where $R^a$ and $R^b$ are as defined above.

**10.** The method as claimed in claim 9, wherein the cyclovinyl phosphine/copper complex is a complex as claimed in either of claims 6 to 8.

**11.** The method as claimed in claim 10, wherein the compound which carries a leaving group is a compound comprising a double bond or a triple bond in a position to said leaving group, or an aromatic compound.

**12.** The method as claimed in either of claims 10 or 11, wherein the nucleophilic compound is an acyclic, cyclic or polycyclic organic hydrocarbon compound comprising at least one atom which carries a lone pair, which may or may not comprise a charge, and preferably a nitrogen, oxygen, sulfur, boron or phosphorus atom, or comprises a carbon atom which can donate its pair of electrons.

**13.** The method as claimed in any of claims 10 to 12, wherein the number of moles of the compound which carries the leaving group and the number of moles of the nucleophilic compound is most commonly between 0.1 and 2.0, preferably between 0.5 and 1.5, more preferably between 0.8 and 1.2, and more preferably still between 0.9 and 1.1.

**14.** The method as claimed in any of claims 10 to 13, wherein the total amount of cyclovinyl phosphine/copper complex catalyst, expressed by the molar ratio between the number of moles of complex, expressed as copper, and the number of moles of compound which carries a leaving group, is generally between 0.001 and 0.5, preferably between 0.01 and 0.1

**15.** The method as claimed in any of claims 10 to 14, wherein a base is used whose pKa is between 4 and 30.

**16.** The method as claimed in any of claims 10 to 15, wherein a base is used which is selected from alkali metal or alkaline earth metal carbonates, hydrogen carbonates, phosphates or hydroxides, alkali metal hydrides, alkali metal alkoxides, and tertiary amines.

**17.** The method as claimed in any of claims 10 to 16, which is carried out in the presence of a polar organic solvent chosen among linear or cyclic carboxamides such as N,N-dimethylacetamide (DMAC), N,N-diethylacetamide, dimethylformamide (DMF), diethylformamide or 1-methyl-2-pyrrolidinone (NMP); dimethylsulfoxide (DMSO); hexamethylphosphotriamide (HMPT); tetramethylurea; nitrous compound such as nitromethane, nitroethane, 1-nitropropane, 2-nitropropane or their mixture, nitrobenzene; aliphatic or aromatic nitriles, such as acetonitrile, propionitrile, butanenitrile, isobutanenitrile, pentanenitrile, 2-methylglutaronitrile or adiponitrile; tetramethylene sulfone (sulfolane); organic carbonates, such as dimethyl carbonate, diisopropyl carbonate or di(n-butyl) carbonate; alkyl esters, such as ethyl acetate or isopropyl acetate; halogenated or nonhalogenated aromatic hydrocarbons, such as chlorobenzene or toluene; ketones, such as acetone, methyl ethyl ketone, methyl isobutyl ketone, cyclopentanone or cyclohexanone; nitrogenous heterocycles, such as pyridine, picoline and quinolines; or a mixture of two or more of those solvents.

**18.** The method as claimed in any of claims 10 to 17, wherein the nucleophilic compound and/or the compound which carries the leaving group is (are) used as reaction solvent(s).

**19.** The method as claimed in any of claims 10 to 18, wherein the cyclovinyl phosphine/copper complex is prepared in situ.

**Patentansprüche**

**1.** Verwendung eines Cyclovinyl-Phosphins als Ligand eines Kupfer enthaltenden Komplexes, das die Formel (1)

aufweist:

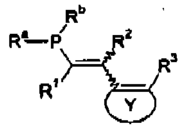

(1)

wobei

- $R^a$ und $R^b$, identisch oder unterschiedlich, vorzugsweise identisch, jedes ein Radikal darstellt, das unabhängig ausgewählt ist aus Alkyl, Aryl, Heteroaryl, Monoalkylamin, Dialkylamin, Alkoxy, Aryloxy, Heteroaryloxy;
- $R^1$ Wasserstoff oder Alkyl darstellt;
- $R^2$ und $R^3$ identisch oder unterschiedlich, unabhängig ausgewählt sind aus Wasserstoff, einem Kohlenwasserstoff-Radikal, einem Aryl-Radikal und einem Heteroaryl-Radikal; und

  - der Zyklus Y einen mono-, bi- oder trizyklischen Kern darstellt, der umfasst:

    eine Gesamtheit von 5 bis 20 Kettengliedern;
    gegebenenfalls ein oder mehrere Heteroatome, ausgewählt aus Stickstoff, Sauerstoff, Schwefel und Phosphor; und
    gegebenenfalls eine oder mehrere andere intrazyklische Doppelbindungen,
    wobei der Zyklus Y gegebenenfalls durch eine oder mehrere chemische Spezies, ausgewählt aus Alkyl-G-, Alkenyl-G-, Alkinyl-G-, Aryl-G-, Heteroaryl-G-(worin G eine Bindung, das Sauerstoffatom oder Schwefelatom darstellt), Halogen, $-NO_2$, $-NH_2$, - CN und $PR^aR^b$, worin $R^a$ und $R^b$ solche sind, wie oben definiert, substituiert Ist.

**2.** Verwendung nach Anspruch 1, bei der der Zyklus Y, der im Phosphin der Formel (1) vorhanden ist, ein aromatischer oder nicht aromatischer, mono-, bi- oder trizyklischer Kern ist, gegebenenfalls Träger eines oder mehrerer Heteroatome, ausgewählt aus Stickstoff, Sauerstoff, Schwefel und Phosphor, ist.

**3.** Verwendung nach Anspruch 1 oder Anspruch 2, bei der der Zyklus Y, der in dem Phosphin der Formel (1) vorhanden ist, ausgewählt ist aus Cyclopenten, Cyclopentadien, Pyrrolen, Imidazolen, Pyrrolinen, Imidazolinen, Pyrazolinen, Furan, Dihydrofuran, Thiophen, Dihydrothiophen, Isoxazolen, Thiazolen und Isothiazolen sowie ihren Dihydrogen-Analogen, Benzol, Cyclohexadienen, Cyclohexen, Pyridin und seinen Di- und Tetra-Hydrogen-Analogen, Pyrazinen, Pyrimidinen, Pyridazinen und ihren Di- und Tetrahydrogen-Analogen, Pyranen und Dihydropyranen, Triazin und seinen Di- und Tetrahydrogen-Analogen, Dithiazin, Cyclohepten, Cycloheptadienen, Azepinen und ihren partiellen hydrogenierten Analogen, Cycloocten, Cyclooctadienen, Cyclooctatrien, Azocinen, Pentalen, Indan, Indenen, Bornenen, Norbornenen, Naphtalen, Azulen, Heptalen, Cyclopentacycloocten, Benzocycloheptenen, Benzocycloocten, Indolizln, Indol, Isoindol, Chinazolinen, Chinolin, Isochinolin, Phtalazin, Naphtyridin, Chinoxalin, Cinnolin, Chromanen, Isochromanen Chromenen und Isochromenen, Indolinen und Isoindolinen, Indacenen, Acenaphtylenen, Fluoren, Phenalen, Phenanthren, Anthracen, Thianthren, Xanthen, Phenoxathiin, Carbazolen, Carbolin, Phenanthridin, Acridin, Perimidin, Phenanthrolin, Phenazin, Phenothiazin, Phenoxazin, sowie ihren partiell hydrogenierten Analogen.

**4.** Verwendung nach einem der vorhergehenden Ansprüche, bei der die Verbindung der Formel (1) die folgenden Eigenschaften, für sich oder in Kombination von zweien oder mehreren unter ihnen genommen, besitzt:

- $R^a$ und $R^6$, Identisch oder unterschiedlich, jeweils ein Radikal darstellt, das unabhängig ausgewählt Ist aus Alkyl, insbesondere Methyl, Ethylpropyl, Butyl; Aryl, insbesondere Phenyl oder Naphtyl, Heteroaryl, insbesondere Pyridyl oder Chiriolyl und vorzugsweise sind $R^a$ und $R^b$ identisch und stellen jeweils Phenyl dar;
- $R^a$ und $R^b$, identisch oder unterschiedlich, unabhängig ausgewählt sind aus Wasserstoff, einem Alkyl-Radikal, einem Aryl-Radikal und einem Heteroaryl-Radikal, insbesondere aus Wasserstoff und einem Alkyl-Radikal, insbesondere Methyl, Ethyl oder Propyl; und
- Y einen mono-, bi- oder trizyklischen, vorzugsweise monozyklischen Kern darstellt, der 5 oder 6 Kettenglieder und gegebenenfalls 1, 2 oder 3 Heteroatome, ausgewählt aus Stickstoff, Sauerstoff und Schwefel umfasst, wobei Y vorzugsweise ein aromatischer Kern ist, gegebenenfalls substituiert durch eine oder mehrere chemische Spezies ausgewählt aus Alkyl-G-, Alkenyl-G-, Alkinyl-G-, Aryl-G-, Heteroaryl-G- (wobei G eine Bindung, das

Sauerstoffatom oder das Schwefelatom darstellt), Halogen, $-NO_2$, $-NH_2$, -CN und $PR^aR^b$, wobei $R^a$ und $R^b$ solche, wie vorher definiert, sind.

**5.** Verwendung nach einem der vorhergehenden Ansprüche, bei der die Verbindung der Formel (1) die folgenden Eigenschaften besitzt;

- $R^a$ und $R^b$, identisch oder unterschiedlich, jeweils ein Radikal darstellt, das unabhängig ausgewählt ist aus Aryl, Insbesondere Phenyl oder Naphtyl, und Heteroaryl, insbesondere Pyridyl oder Chinolyl, und vorzugsweise sind $R^a$ und $R^b$ identisch und stellen jeweils ein Phenyl dar;
- $R^1$, $R^2$ und $R^3$ identisch oder unterschiedlich, unabhängig ausgewählt sind aus Wasserstoff und einem Alkyl-Radikal, insbesondere Methyl, Ethyl oder Propyl; und
- Y einen monozyklischen Kern darstellt, vorzugsweise monozyklisch umfassend 6 Kettenglieder und gegebenenfalls 1, 2 oder 3 Heteroatome, bevorzugt 1 Heteroatom, ausgewählt aus Stickstoff, Sauerstoff und Schwefel, vorzugsweise Stickstoff, wobei Y vorzugsweise ein aromatischer Kern ist, gegebenenfalls substituiert durch eine oder mehrere chemische Spezies ausgewählt aus Alkyl-G-, Alkenyl-G-, Alkinyl-G-, Aryl-G-, Heteroaryl-G- (wobei G eine Bindung, das Sauerstoffatom oder das Schwefelatom darstellt), Halogen,$-NO_2$,$-NH_2$, -CN und $PR^aR^b$, wobei $R^a$ und $R^b$ solche, wie vorher definiert, sind.

**6.** Verbindung, die ein Kupfer-Komplex mit mindestens einem Cyclovinyl-Phosphin der Formel (1) ist, wie es nach einem beliebigen der Ansprüche 1 bis 5 definiert Ist.

**7.** Verbindung nach Anspruch 6, die der dimere Pyridylvinyldiphenylphosphin/lodid-Kompfex des Kupfers $[C_5H_4N\text{-}CH{=}CH\text{-}PPh_2]_2Cu_2I_2$ ist, wobei Ph das Phenyl-Radikal darstellt.

**8.** Verbindung nach Anspruch 6, die der monomere Pyridylvinyldiphenylphosphin/lodid-Komplex des Kupfers $[Py\text{-}CH{=}CH\text{-}PPh_2]_2CuI$, wobei Ph das Phenyl-Radikal und Py Pyridyl darstellt, in Form eines reinen Isomers Z oder E oder in Mischung der zwei Isomere in allen Verhältnissen ist.

**9.** Verfahren zur Erzeugung einer Kohlenstoff-Kohlenstoff (C-C) oder Kohlenstoff-Heteroatom (C-HE) Bindung, in dem eine Verbindung, welche eine Abgangsgruppe trägt, mit einer nukleophilen Verbindung, welche ein Kohlenstoffatom oder ein Heteroatom (HE) trägt, die geeignet ist, sich bei der Abgangsgruppe zu substituieren, reagieren gelassen wird, wobei so eine C-C oder C-HE-Bindung erzeugt wird, wobei bei dem Verfahren die Reaktion in Anwesenheit einer wirksamen Menge eines katalytischen Systems durchgeführt wird, das mindestens einen Kupferkomplex mit mindestens einem Cyclovinyl-Phosphin der Formel (1) umfasst:

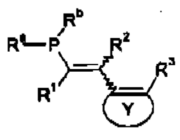

(1)

wobei

- $R^a$ und $R^b$, identisch oder unterschiedlich, vorzugsweise identisch, jedes ein Radikal darstellt, das unabhängig ausgewählt ist aus Alkyl, Aryl, Heteroaryl, Monoalkylamin, Dialkylamin, Alkoxy, Aryloxy, Heteroaryloxy;
- $R^1$ ausgewählt ist aus Wasserstoff, einem Kohlenwasserstoff-Radikal oder einem Heteroaryl-Radikal;
- $R^2$ und $R^3$ identisch oder unterschiedlich, unabhängig ausgewählt sind aus Wasserstoff, einem Kohlenwasserstoff-Radikal, einem Aryl-Radikal und einem Heteroaryl-Radikal; und
- der Zyklus Y einen mono-, bi- oder trizyklischen Kern darstellt, der umfasst:
    - eine Gesamtheit von 5 bis 20 Kettengliedern;
    - gegebenenfalls ein oder mehrere Heteroatome, ausgewählt aus Stickstoff, Sauerstoff, Schwefel und Phosphor; und
    - gegebenenfalls eine oder mehrere andere intrazyklische Doppelbindungen,

wobei der Zyklus Y gegebenenfalls durch eine oder mehrere chemische Spezies ausgewählt aus Alkyl-G-, Alkenyl-G-, Alkinyl-G-, Aryl-G-, Heteroaryl-G-(worin G eine Bindung, das Sauerstoffatom oder Schwefelatom darstellt), Halogen, $-NO_2$, $-NH_2$, -CN und $PR^aR^b$, worin $R^a$ und $R^b$ solche sind, wie oben definiert, substituiert ist.

**10.** Verfahren nach Anspruch 9, bei dem der Kupferkomplex mit mindestens einem Cyclovinyl-Phosphin ein Komplex nach einem beliebigen der Ansprüche 6 bis 8 ist.

**11.** Verfahren nach Anspruch 10, bei dem die Verbindung, welche eine Abgangsgruppe trägt, eine Verbindung Ist, die eine Doppelbindung oder eine Dreifachbindung In α-Position der Abgangsgruppe oder eine aromatische Verbindung umfasst.

**12.** Verfahren nach einem beliebigen der Ansprüche 10 oder 11, bei dem die nukleophile Verbindung eine organische Kohlenwasserstoffverbindung ist, azyklisch, zyklisch oder polyzyklisch, die mindestens ein Atom umfasst, das ein freies Dublett trägt, das eine Ladung oder keine Ladung aufweisen und vorzugswelse ein Stickstoff-, Sauerstoff-, Schwefel-, Bor- oder Phosphoratom umfassen kann oder ein Kohlenstoffatom umfasst, das sein Elektronenpaar geben kann.

**13.** Verfahren nach einem beliebigen der Ansprüche 10 bis 12, bei dem die Molzahl der Verbindung, welche die Abgangsgruppe trägt, und die Molzahl der nukleophilen Verbindung am häufigsten zwischen 0,1 und 2,0, vorzugsweise zwischen 0,5 und 1,5, noch bevorzugter zwischen 0,8 und 1,2 und im bevorzugtesten Fall zwischen 0,9 und 1,1 liegt.

**14.** Verfahren nach einem beliebigen der Ansprüche 10 bis 13, bei dem die die Gesamtmenge des Katalysator-Komplexes Kupfer/Cyclovinyl-Phosphin, ausgedrückt durch das Molverhältnis zwischen der Molzahl des Komplexes ausgedrückt In Kupfer, und der Molzahl der Verbindung, welche eine Abgangsgruppe trägt, im Allgemeinen zwischen 0,001 und 0,5, vorzugsweise zwischen 0,01 und 0,1 variiert.

**15.** Verfahren nach einem beliebigen der Ansprüche 10 bis 14, bei dem eine Base eingesetzt wird, deren Säurekonstante zwischen 4 und 30 liegt.

**16.** Verfahren nach einem beliebigen der Ansprüche 10 bis 15, bei dem eine Base, ausgewählt aus Carbonaten, Hydrocarbonaten, Phosphaten oder Hydroxiden von alkalischen Metallen oder erdalkalischen Metallen, Hydriden von alkalischen Metallen, Alkoholate von alkalischen Metallen und tertiäre Amine, eingesetzt wird.

**17.** Verfahren nach einem beliebigen der Ansprüche 10 bis 16, das in Anwesenheit eines polaren organischen Lösungsmittels durchgeführt wird, das ausgewählt Ist aus: linearen oder zyklischen Carboxamiden, von denen N,N-Dimethylacetamid (DMAC), N,N-Diethylacetamid, Dimethylformamid (DMF), Diethylformamid oder 1-Methyl-2-pyrrolidon (NMP); Dimethylsufoxid (DMSO); Hexamethylphosphotriamid (HMPT); Tetramethylharnstoff; Nitroverbindungen, von denen Nitromethan, Nitroethan, 1-Nitropropan, 2-Nitropropan oder ihre Mischungen, Nitrobenzol; aliphatischen oder aromatischen Nitrilen, von denen Actonitril, Propionitril, Butannitril, Isobutannitril, Pentannitril, 2-Methylglutaronltril, Adiponitril; Tetramethylensulfon (Sulfolan); organischen Carbonaten, von denen Dimethylcarbonat, Di-Isopropylcarbonat, Di-n-Butylcarbonat; Alkylestern, von denen Ethyloder Isopropylacetat; aromatischen, halogenierten oder nichthalogenierten Kohlenwasserstoffen, von denen Chlorbenzol oder Toluol; Ketonen, von denen Aceton, Methylethylketon, Methylisobuthylketon, Cyclopentanon, Cyclohexanon; Stickstoff-Heterocyclen, von denen Pyridin, Picolin und Chinollnen oder Mischungen aus zwei oder mehreren dieser Lösungsmittel.

**18.** Verfahren nach einem beliebigen der Ansprüche 10 bis 17, bei dem die nukleophlle Verbindung und/oder die Verbindung, welche die Abgangsgruppe trägt, als Lösungsmittel der Reaktion verwendet wird (werden).

**19.** Verfahren nach einem beliebigen der Ansprüche 10 bis 18, bei dem der Komplex Kupfer/Cyclovinyl-Phosphin In situ hergestellt wird.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 03101966 A
- EP 1167372 A1


### Littérature non-brevet citée dans la description


- **F. ULLMANN ; H. KIPPER.** *Ber. dtsch. Chem. Ges.,* 1905, vol. 38, 2120-2126
- **BUCHWALD.** *J. Am. Chem. Soc.,* 2001, vol. 123, 7727-7729
- *COORDINATION CHEMISTRY REVIEWS,* 2004, vol. 248, 2337-2364
- **M. TAILLEFER ; H. J. CRISTAU.** *Tet. Lett.,* 1998, vol. 39, 7857
- **M. TAILLEFER.** *J. Organometall. Chem.,* 2001, vol. 624, 307-315
- **T. W. GREENE.** Protective Groups in Organic Synthesis. John Wiley & Sons, Inc,
- Bulletin de la Société Chimique de France. 1966